# EUROPEAN PATENT SPECIFICATION

(11) **EP 4 364 979 B1**
(45) Date of publication and mention of the grant of the patent: **31.12.2025**
(21) Application number: 21948482.1
(22) Date of filing: 02.11.2021
(51) Int. Cl.: B60C 19/00, B60C 13/00

(54) **TIRE**
REIFEN
PNEU

(30) Priority: 30.06.2021 JP 2021109742
(43) Date of publication of application: 08.05.2024
(73) Proprietor: BRIDGESTONE CORPORATION, Chuo-ku Tokyo 104-8340 (JP)
(72) Inventor: SHIMURA, Takashi, Tokyo 104-8340 (JP)
(74) Representative: Marks & Clerk LLP
(86) International application number: PCT/JP2021/040456
(87) International publication number: WO 2023/276179

(56) References cited:
- EP-A1- 3 533 640
- WO-A1-2019/112019
- JP-A- 2004 148 953
- JP-A- 2006 056 443
- JP-A- 2019 104 280
- JP-A- 2019 104 283
- JP-A- 2019 104 396
- JP-A- 2019 104 453
- US-A1- 2014 166 177
- US-A1- 2020 070 597
- US-A1- 2020 290 406
- US-A1- 2020 369 094
- US-A1- 2021 188 018
- US-B2- 10 919 348

## Description

### TECHNICAL FIELD

The present invention relates to a tire.

### BACKGROUND

A conventional tire in which a communication device (such as an RF tag) is embedded is known (Patent Literature (PTL) 1).

### CITATION LIST

### Patent Literature

PTL 1: JP 2021-046057 A
US10919348B2 which discloses a tire that includes an RFID locator. The tire includes a pair of bead areas and a ground-contacting tread disposed radially outwardly of the pair of bead areas. Each sidewall of a pair of sidewalls extends from a respective bead area to the tread. A carcass extends toroidally between each of the bead areas radially inwardly of the tread and an inner liner is formed on an inside surface of the carcass. An RFID tag is attached to the tire at an area of a selected one of the sidewalls through interior sidewall attachment. A locator indicia is integrated into an axial outer surface of the selected sidewall at a locator area.

US2020290406A1 which discloses a tire that includes: a decorative part having a base surface; and a first patterned region in which plural first protrusions protruding from the base surface of the decorative part at a protrusion height of from 0.1 mm to 1.0 mm and intervals of larger than 1.0 mm and 3.0 mm or smaller are formed.

US2020369094A1 which discloses a tire that includes: a decorative portion that is formed on an outer surface of the tire and has a base surface; and a pattern region that is provided at the decorative portion and includes plural projections projecting from the base surface and formed at an interval of from more than 0.1 mm to 1.0 mm, the plural projections having a height of from 0.1 mm to 1.0 mm, in which at least in the pattern region, the plurality of projections is inclined in one direction with respect to a normal line perpendicular to the base surface.

US2021188018A1 which discloses a tire that includes: a decorative portion that is formed on an outer surface of the tire and that has a base surface; and a pattern region that is provided at the decorative portion and that formed with plural projections projecting at a height of from 0.1 mm to 1.0 mm from the base surface and formed at an interval of from more than 0.1 mm to 1.0 mm, in which the pattern region is provided with a gradual decrease region in which a height of the plural projections disposed adjacent to each other gradually decreases.

WO2019112019A1 which discloses a tire provided with: a decorative part that is formed on the tire outer surface and that has a base surface; and protrusions each having a foundation part that projects from the base surface of the decorative part, extends along the base surface, and forms a base-surface side, and a distal end part that forms a distal-end side; the decorative part being provided with a pattern region in which a plurality of the protrusions are formed so as to be adjacent to each other, and in which there is formed an overlap part where mutually adjacent protrusions at least partially overlap each other when viewed along the length direction of the protrusions; and the protrusions in the pattern region project protruding at a projection height of 0.1-1.0 mm inclusive from the base surface, and the pitch of the protrusions being 0.1-1.0 mm inclusive.

EP3533640A1 which discloses an RFID mesh label configured to be integrally incorporated within a vulcanized tire and to further provide unique identifier(s) and/or other information about the vulcanized tire during and/or post-vulcanization, the RFID mesh label including a face layer configured to be positioned adjacent or flush to an outer surface of the vulcanized tire; an RFID layer positioned underneath the face layer, the RFID layer having an RFID device that is configured to provide unique identifier(s) and/or other information about the vulcanized tire upon being read with an RFID reader; and a mesh backing overlying the RFID layer and adapted to be integrally incorporated in a vulcanized tire after subjecting a green tire to a vulcanization process.

### SUMMARY

### (Technical Problem)

However, in the above-described conventional tire there is a problem in that it is difficult to ascertain the position of the communication device when the tire is viewed from outside.

It would be helpful to provide a tire, in which the position of the communication device is easy to ascertain.

### (Solution to Problem)

The tire according to the present invention is as recited in claim 1.

### (Advantageous Effect)

It is possible to provide a tire, in which the position of the communication device is easy to ascertain.

### BRIEF DESCRIPTION OF THE DRAWINGS

In the accompanying drawings:
FIG. 1 is a side view illustrating a portion of a tire side portion of a tire according to a first embodiment of the present invention as viewed from a tire width direction outer side;
FIG. 2 is a cross-sectional view, in the tire width direction, illustrating a portion of the tire of FIG. 1 in cross section along the A-A line in FIG. 1;
FIG. 3 is a perspective view illustrating an example of a communication device that can be used in a tire according to any embodiment of the present invention;
FIG. 4 is an exploded perspective view illustrating, in an exploded state, the communication device illustrated in FIG. 3;
FIG. 5 is cross-sectional view, in the tire width direction, illustrating a portion of a tire according to a second embodiment not according to the present invention;
FIG. 6 is a side view of a tire according to a third embodiment of the present invention;
FIG. 7 is an enlarged side view illustrating a decorative portion of the tire according to the third embodiment of the present invention;
FIG. 8 is an enlarged plan view illustrating protrusions formed in a medium brightness region of the decorative portion of the tire according to the third embodiment of the present invention;
FIG. 9 is a plan view illustrating protrusions formed in a medium brightness region of the decorative portion of the tire according to the third embodiment of the present invention;
FIG. 10A and FIG. 10B are cross-sectional views illustrating protrusions formed in a medium brightness region and a low brightness region, respectively, of the decorative portion of the tire according to the third embodiment of the present invention;
FIG. 11 is an enlarged plan view illustrating protrusions formed in the low brightness region of the decorative portion of the tire according to the third embodiment of the present invention;
FIG. 12 is a plan view illustrating protrusions formed in a medium brightness region of the decorative portion of the tire according to the third embodiment of the present invention;
FIG. 13 is a side view of a tire according to a fourth embodiment of the present invention;
FIG. 14 is an enlarged side view illustrating a decorative portion of the tire according to the fourth embodiment of the present invention;
FIG. 15 is an enlarged plan view illustrating protrusions formed in a first low brightness region of the decorative portion of the tire according to the fourth embodiment of the present invention;
FIG. 16 is a plan view illustrating protrusions formed in the first low brightness region of the decorative portion of the tire according to the fourth embodiment of the present invention;
FIG. 17 is an enlarged plan view illustrating protrusions formed in a second low brightness region of the decorative portion of the tire according to the fourth embodiment of the present invention;
FIG. 18 is a plan view illustrating protrusions formed in the second low brightness region of the decorative portion of the tire according to the fourth embodiment of the present invention;
FIG. 19 is an enlarged plan view illustrating protrusions formed in a third low brightness region of the decorative portion of the tire according to the fourth embodiment of the present invention;
FIG. 20 is a plan view illustrating protrusions formed in the third low brightness region of the decorative portion of the tire according to the fourth embodiment of the present invention;
FIG. 21A, FIG. 21B, and FIG. 21C are cross-sectional views illustrating protrusions formed on the decorative portion of the tire according to the fourth embodiment of the present invention;
FIG. 22A is a perspective view of a tire side portion of the tire according to a fifth embodiment of the present invention, looking down from an angle above a rotation axis, and FIG. 22B is a cross-sectional view along the rotation axis of the tire according to the fifth embodiment of the present invention;
FIG. 23 is a plan view illustrating a first low brightness region of the decorative portion of the tire according to the fifth embodiment of the present invention;
FIG. 24 is an enlarged plan view illustrating protrusions formed in the first low brightness region of the decorative portion of the tire according to the fifth embodiment of the present invention;
FIG. 25 is a cross-sectional view illustrating an extension portion, which extends in a tire radial direction, of a first asterisk protrusion that is formed in the first low brightness region of the decorative portion of the tire according to the fifth embodiment of the present invention;
FIG. 26 is a cross-sectional view illustrating the extension portion, which extends in a tire circumferential direction, of a first asterisk protrusion that is formed in the first low brightness region of the decorative portion of the tire according to the fifth embodiment of the present invention;
FIG. 27A is a side view of the tire according to a sixth embodiment of the present invention, FIG. 27B is a descriptive diagram illustrating the relationship between a raised bottom protrusion and the brightness of a gradation region that is disposed in the low brightness region of the decorative portion, and FIG. 27C is a perspective view of the raised bottom protrusion;
FIG. 28 is a plan view illustrating the low brightness region of the decorative portion of the tire according to the sixth embodiment of the present invention;
FIG. 29 is an enlarged plan view illustrating protrusions that are formed in the low brightness region of the decorative portion of the tire according to the sixth embodiment of the present invention;
FIG. 30A is a cross-sectional view illustrating the first asterisk protrusions that are formed in the low brightness region of the decorative portion of the tire according to the sixth embodiment of the present invention, and FIG. 30B is a cross-sectional view illustrating second asterisk protrusions formed in the low brightness region;
FIG. 31 is a side view of the tire according to a seventh embodiment of the present invention;
FIG. 32 is an enlarged side view illustrating the decorative portion of the tire according to the seventh embodiment of the present invention;
FIG. 33 is an enlarged plan view illustrating protrusions that are formed on the decorative portion of the tire according to the seventh embodiment of the present invention;
FIG. 34 is a perspective view illustrating a portion of the protrusions that are formed on the decorative portion of the tire according to the seventh embodiment of the present invention;
FIG. 35 is a schematic plan view illustrating an overlapping state of adjacent protrusions that are formed in a patterned region according to the seventh embodiment of the present invention; and
FIG. 36 is a schematic cross-sectional view illustrating the overlapping state of adjacent protrusions formed in the patterned region according to the seventh embodiment of the present invention.

### DETAILED DESCRIPTION

A tire according to the present invention can be preferably used for any type of pneumatic tire, for example, a passenger vehicle pneumatic tire, etc.

Embodiments of the tire are described below, with reference to the drawings.

Members and portions common between the drawings have the same reference numerals. In certain drawings, a tire width direction is denoted by a reference sign "TW", a tire radial direction is denoted by a reference sign "RD", and a tire circumferential direction is denoted by a reference sign "CD". In the present specification, a side closer to a tire cavity is referred to as "tire inner side" and a side farther from the tire cavity is referred to as "tire outer side".

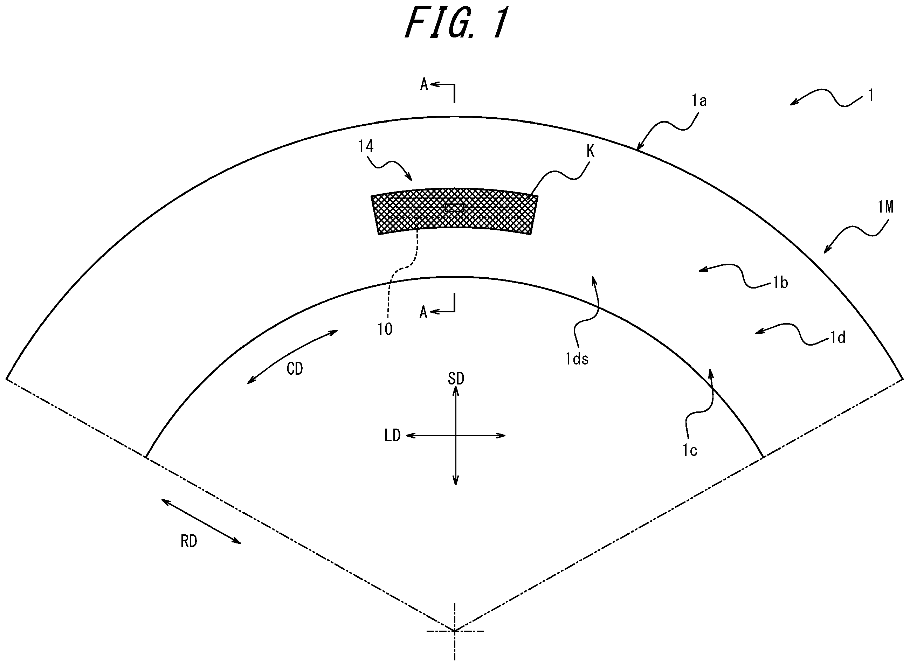

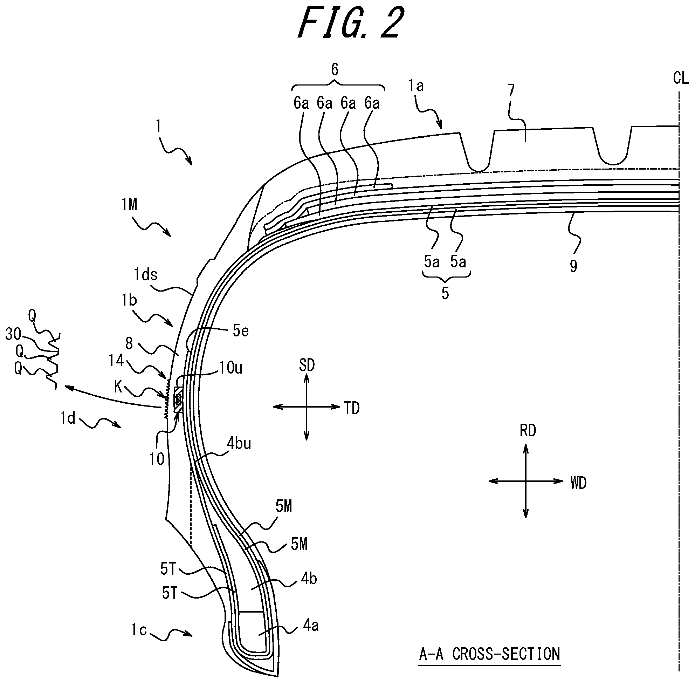

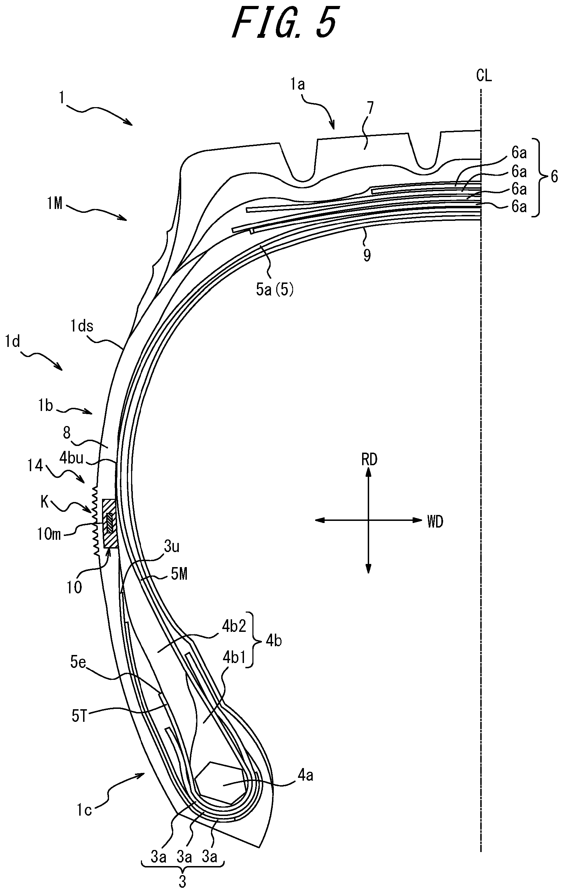

FIG. 1 and FIG. 2 are drawings for describing a tire 1 according to a first embodiment of the present invention. FIG. 1 is a side view illustrating a portion of a tire side portion of the tire according to the first embodiment of the present invention as viewed from the tire width direction outer side. FIG. 2 is a cross-sectional view, in the tire width direction, illustrating a portion of the tire (specifically, a portion on one side relative to a tire equatorial plane, CL) in FIG. 1 in cross section along the A-A line in FIG. 1. FIG. 5 is a cross-sectional view, in the tire width direction, illustrating a portion of the tire (specifically, a portion on one side relative to the tire equatorial plane, CL) according to a second embodiment not according to the present invention but nevertheless provided to aid the understanding of the present invention.

The tire 1 of the embodiment in FIG. 1 and FIG. 2 is configured as a passenger vehicle pneumatic tire. The tire 1 of the embodiments in FIG. 5 is configured as a truck/bus pneumatic tire. For convenience of explanation, these embodiments are described together below.

The tire 1 of any embodiment of the present invention may be configured as any type of tire.

The tire 1 includes a tire body 1M and a communication device 10. The tire body 1M corresponds to portions of the tire 1 other than the communication device 10.

Hereafter, unless otherwise noted, the positional relationship and dimensions of each element are measured in a standard state, with the tire 1 fitted to an applicable rim, a prescribed internal pressure applied, and no load applied. Additionally, in a state in which the tire 1 is fitted to an applicable rim, a prescribed internal pressure is applied, and no load is applied, the width, in a tire width direction, of a contact patch in contact with the ground is referred to as a ground contact width of the tire, and an end in the tire width direction of the ground contact width is referred to as a ground contact end.

In the present specification, "applicable rim" (Measuring Rim in the STANDARDS MANUAL of ETRTO and Design Rim in the YEAR BOOK of TRA) refers to an approved rim of an applicable size as described by, or as described in the future by, valid industrial standards for the region in which a pneumatic tire is produced or used, such as the JATMA YEAR BOOK of JATMA (the Japan Automobile Tyre Manufacturers Association) in Japan, the STANDARDS MANUAL of ETRTO (European Tyre and Rim Technical Organization) in Europe, and the YEAR BOOK of TRA (The Tire and Rim Association, Inc.) in the U.S., and in a case in which a rim size is not as described in these industrial standards, the "applicable rim" refers to a rim with a width corresponding to a bead width of the pneumatic tire. The "applicable rim" includes current sizes as well as sizes that will be included in the future in the above industrial standards. Examples of a "size described in the future" may include sizes described in "FUTURE DEVELOPMENTS" in the 2013 edition of the STANDARDS MANUAL of ETRTO.

In the present specification, "prescribed internal pressure" refers to an air pressure (maximum air pressure) corresponding to the maximum load capacity of a single wheel in an applicable size and ply rating described in the JATMA YEAR BOOK or other industrial standards, and in case of a size that is not described in the above industrial standard, the "prescribed internal pressure" refers to an air pressure (the maximum air pressure) corresponding to the maximum load capability prescribed for each vehicle on which the tire is installed. Additionally, in the present specification, "maximum load" means a load that corresponds to the maximum load capability in a tire in an applicable size described in the above industrial standards, or, in case of a size that is not described in the above industrial standards, the "maximum load" means a load that corresponds to the maximum load capability prescribed for each vehicle on which the tire is installed.

First, the tire body 1M is described.

As illustrated in drawings such as FIG. 2 and FIG. 5, in each embodiment described herein, the tire body 1M includes a tread portion 1a, a pair of sidewall portions 1b that extend to the tire radial direction inner side from both ends in the tire width direction of the tread portion 1a, and a pair of bead portions 1c disposed at an end of the tire radial direction inner side of each sidewall portion 1b. The tread portion 1a is a part, in the tire width direction, of the tire body 1M between a pair of ground contact ends. When the tire is 1 is fitted to a rim, the bead portion 1c is configured to contact the rim on the tire radial direction inner side and the tire width direction outer side.

The tire body 1M has a pair of tire side portions 1d that extend to the tire radial direction inner side from both ends, in the tire width direction, of the tread portion 1a. The tire side portions 1d are composed of a sidewall portion 1b and a bead portion 1c. In the present specification, the surface of the tire outer side at the tire side portion 1d is referred to as "tire outer surface 1ds of the tire side portion 1d".

Additionally, the tire body 1M includes a pair of bead cores 4a, a pair of bead fillers 4b, a carcass 5, a belt 6, tread rubber 7, side rubber 8, and an inner liner 9.

Each bead core 4a is embedded in a corresponding bead portion 1c. The bead cores 4a include multiple bead wires with a periphery covered with rubber. The bead wires are preferably made of a metal (for example, steel). The bead wires can, for example, be composed of monofilaments or stranded wires. The bead wires may be made of organic fibers or carbon fibers.

Each bead filler 4b, respectively, is positioned on the tire radial direction outer side with respect to a corresponding bead core 4a. The bead fillers 4b extend in tapered form to the tire radial direction outer side. The bead fillers 4b are, for example, rubber.

The bead fillers may be referred to as "stiffeners".

As illustrated in FIG. 5, when the tire body 1M (and thus the tire 1) is configured as a truck/bus pneumatic tire, the bead fillers 4b may be made of multiple bead filler portions 4b1 and 4b2 (two in each example in FIG. 5). These multiple bead filler portions 4b1 and 4b2 can, for example, differ in hardness. These multiple bead filler portions 4b1 and 4b2 are, for example, arranged (layered) along the tire radial direction.

The carcass 5 spans between the pair of bead cores 4a and extends toroidally. The carcass 5 is made of one or more carcass plies 5a. Each carcas s ply 5a includes one or more carcass cords and a coating rubber that covers the carcass cords. The carcass cords can be formed from monofilaments or stranded wires.

The carcass cords may be made of organic fibers composed of polyester, nylon, rayon, aramid, etc., and may be made of a metal (for example, steel). When the tire 1 is configured as a truck/bus pneumatic tire, the carcass cords are preferably made of a metal (for example, steel). When the tire 1 is configured as a passenger vehicle pneumatic tire, the carcass cords are preferably made of organic fibers composed of polyester, nylon, rayon, aramid, or the like.

The carcass plies 5a include a ply main body 5m positioned between the pair of bead cores 4a. The carcass plies 5a may further include a ply foldback portion 5T that folds back from both ends of the ply main body 5M around the bead cores 4a from the tire width direction inner side to the tire width direction outer side. However, the carcass plies 5a may not necessarily include a ply foldback portion 5T. The carcass 5 preferably has a radial structure, but may have a biased structure.

The belt 6 is arranged on the tire radial direction outer side with respect to a crown portion of the carcass 5. The belt 6 includes one or more belt layers 6a. Each belt layer 6a includes one or more belt cords and a coating rubber that covers the belt cords. The belt cords can be formed from monofilaments or stranded wires. The belt cords may be made of a metal (for example, steel) or made of organic fibers composed of polyester, nylon, rayon, aramid, or the like.

The tread rubber 7 is positioned in the tread portion 1a, on the tire radial direction outer side of the belt 6. The tread rubber 7 forms a tread surface, which is a surface of the tire radial direction outer side of the tread portion 1a. A tread pattern is formed on the tread surface.

The side rubber 8 is positioned in the sidewall portion 1b, on the tire width direction outer side of the carcass 5. The side rubber 8 forms a surface of the tire width direction outer side of the sidewall portion 1b. The side rubber 8 is integrally formed with the tread rubber 7.

The inner liner 9 is arranged on the tire inner side of the carcass 5 of the tire and, for example, may be layered on the tire inner side of the carcass 5. The inner liner 9 is, for example, formed from a butyl-based rubber with low air permeability. Butyl-based rubbers include, for example, butyl rubber and halogenated butyl rubber, which is a derivative thereof. The inner liner 9 is not limited to butyl-based rubber, and can be made of other rubber compositions, resins, or elastomers.

As illustrated in FIG. 5, when the tire body 1M (and thus the tire 1) is configured as a truck/bus pneumatic tire, the tire body 1M may include a reinforcement member 3 around the bead cores 4a. The reinforcement member 3 may be arranged on a side of the bead core 4a opposite from the carcass 5, as in the example in FIG. 5. The reinforcement member 3 includes one or more reinforcement plies 3a (three in the example in FIG. 5). Each reinforcement ply 3a includes a reinforcement cord. The reinforcement cord may be made of a metal (for example, steel) or made of organic fibers composed of polyester, nylon, rayon, aramid, etc.

In each embodiment described herein, as illustrated in FIG. 1, FIG. 2, and FIG. 5, the tire body 1M includes a decorative portion 14, which has a base surface 30 formed from a tire outer surface 1ds of the tire side portion 1d, and one or more patterned regions K disposed on the decorative portion 14. In each patterned region K, multiple protrusions Q are formed. These multiple protrusions Q protrude from the base surface 30 of the decorative portion 14 with a protrusion height of 0.1 mm or greater and 1.0 mm or less. The spacing between these multiple protrusions Q is 0.1 mm or greater and 3.0 mm or less. The base surface 30 forms a bottom surface of the decorative portion 14. The tire body 1M may include only one decorative portion 14, or the tire body 1M may include multiple decorative portions 14.

As such, the multiple protrusions Q form fine irregularities on the decorative portion 14, which thus easily absorbs light. Therefore, the amount of light reflected to the outer side at the decorative portion 14 becomes less than the amount of light reflected to the outer side at portions of the tire outer surface 1ds of the tire side portion 1d other than the decorative portion 14. Therefore, the brightness of the decorative portion 14 is lower than the brightness of the portions of the tire outer surface 1ds of the tire side portion 1d other than the decorative portion 14.

Next, the communication device 10 is described.

The communication device 10 may be configured to be capable of wireless communication with a prescribed external device (for example, a reader or a reader/writer) that is external to the tire 1, and the configuration of the communication device 10 is not particularly limited.

The communication device 10 preferably has an RF tag. The RF tag may also be referred to as an "RFID tag". The RF tag is preferably configured as a passive type, but may be configured as an active type.

The communication device 10 may have, instead of or in addition to an RF tag, an accelerometer that detects the acceleration of the tire 1, an internal pressure sensor that detects the internal pressure of the tire 1, or other sensors.

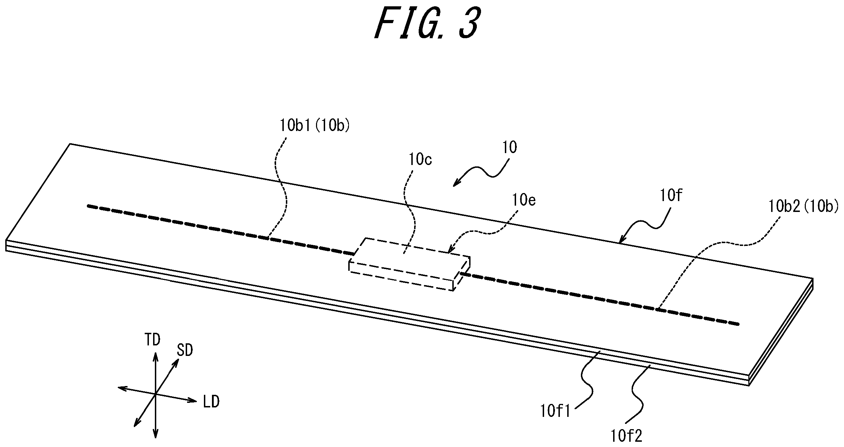

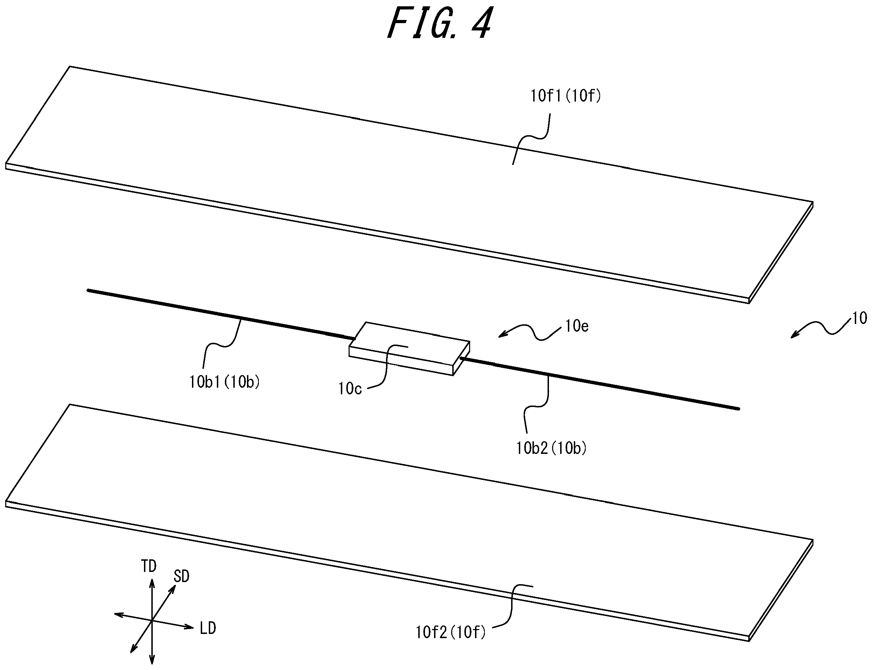

FIG. 3 and FIG. 4 illustrate an example of the communication device 10. In the present example, the communication device 10 has an RF tag. In the present example, the communication device 10 has an RF tag 10e and a cover 10f. The RF tag 10e includes an IC chip 10c and an antenna section 10b. The RF tag 10e is configured as a passive type.

The IC chip 10c operates, for example, by dielectric electromotive force generated by radio waves received at the antenna section 10b. The IC chip 10c, for example, has a controller and a memory unit.

The memory unit may store any information. For example, the memory unit may store identification information for the tire 1. The identification information for the tire 1 is, for example, unique identification information for the tire 1 that can identify each tire by tire, such as the manufacturer of the tire 1, the manufacturing plant, and the date of manufacture. Additionally, the memory unit may also store tire history information such as running distance of the tire, the number of sudden brakings, the number of sudden starts, and the number of sudden cornering situations. Additionally, for example, sensors that detect tire internal temperature, tire internal pressure, tire acceleration, or the like are disposed in the tire cavity, and the memory unit may store detection information detected by these sensors. In this case, the RF tag 10e can acquire the detection information from a sensor by communicating wirelessly with the sensor through the antenna section 10b.

The controller is configured to be able to read out information from the memory unit.

The antenna section 10b has a pair of antennas 10b1 and 10b2. The pair of antennas 10b1, 10b2 are connected to ends, positioned on opposite sides to each other, of the IC chip 10c. The antenna section 10b is configured to be capable of transmitting to and receiving from the above prescribed external device that is external to the tire 1. In the examples in FIG. 3 and FIG. 4, each antenna 10b1, 10b2 extends linearly, but each antenna 10b1, 10b2 may extend to form any shape, for example, a wavy shape or the like.

The cover 10f covers the entirety of the RF tag 10e. The cover 10f is formed, for example, from rubber or resin.

In the present example, the cover 10f has a pair of sheet-shaped cover members 10f1, 10f2. The pair of cover members 10f1, 10f2 overlap each other with the RF tag 10e therebetween. The pair of cover members 10f1, 10f2 are preferably fixed to each other by an adhesive or the like.

However, the cover 10f may be made of one member.

In the present example, the cover 10f has a rectangular shape in a planar view, but the cover 10f may have any shape in a planar view.

The communication device 10 may have no cover 10f, i.e., the communication device 10 may be made of only the RF tag 10e.

The communication device 10 thus formed is capable of receiving, by the antenna section 10b, information transmitted over radio waves or magnetic fields from the prescribed external device. Power is generated in the antenna section 10b of the communication device 10 by rectification (in case of radio waves) or resonance (in case of magnetic fields), and the memory unit and the controller of the IC chip 10c perform prescribed operations. For example, the controller reads the information in the memory unit and returns (transmits) the information to the prescribed external device from the antenna section 10b over radio waves or magnetic fields. The prescribed external device receives the radio waves or the magnetic fields from the communication device 10. The prescribed external device can retrieve the received information and thereby acquire the information stored in the memory unit of the IC chip 10c of the communication device 10.

However, the communication device 10 may have any configuration that is different from this example.

The communication device 10 may have a longitudinal direction LD, a lateral direction SD, and a thickness direction TD. The longitudinal direction LD, the lateral direction SD, and the thickness direction TD are perpendicular to each other.

As illustrated in FIG. 3 and FIG. 4, when the communication device 10 has an RF tag 10e, the longitudinal direction LD of the communication device 10 is parallel to the extension direction of the antenna section 10b. When each antenna 10b1, 10b2 of the antenna section 10b is a wavy shape, the extension direction of the antenna section 10b refers to the extension direction of the amplitude centerline of the waved formed by each antenna 10b1, 10b2. For the communication device 10, the thickness direction TD of the communication device 10 refers to the thickness direction of the cover 10f when the communication device 10 has the cover 10f, and when the communication device 10 has no cover 10f, the thickness direction TD of the communication device 10 refers to the thickness direction of the IC chip 10c.

The length of the RF tag 10e in the longitudinal direction LD is, for example, 20 mm or greater, or preferably 50 mm or greater. Additionally, the length of the RF tag 10e in the longitudinal direction LD is, for example, 100 mm or less, or preferably 70 mm or less.

The length of the RF tag 10e in the lateral direction SD is, for example, 10 mm or less, or preferably 8 mm or less.

The RF tag 10e has a length in the thickness direction TD of preferably, for example, 5 mm or less, or 2 mm or less.

When the communication device 10 has the cover 10f, the length of the communication device 10 in the longitudinal direction LD is, for example, 30 mm or greater, or preferably 60 mm or greater. Additionally, the length of the RF tag 10e in the longitudinal direction LD is, for example, 110 mm or less, or preferably 80 mm or less.

When the communication device 10 has the cover 10f, the length of the communication device 10 in the lateral direction SD is, for example, 20 mm or less, or preferably 15 mm or less.

When the communication device 10 has the cover 10f, the length of the communication device 10 in the thickness direction TD is, for example, 6 mm or less, or preferably 3 mm or less.

The thickness of each cover member 10f1, 10f2 of the cover 10f is, for example, preferably 0.5 mm or greater. Additionally, the thickness of each cover member 10f1, 10f2 of the cover 10f is, for example, preferably 1 mm or less.

In each embodiment described herein, the entirety of the communication device 10 is embedded within the tire side portion 1d of the tire body 1M, as illustrated in FIG. 1, FIG. 2, and FIG. 5. The communication device 10 is embedded in a part of the tire side portion 1d of the tire body 1M that is further to the tire width direction outer side than the carcass 5.

The entirety of the communication device 10 is positioned within the decorative portion 14 in a plane (FIG. 1) projected in a tire width direction of the tire side portion 1d. Here, "plane projected in a tire width direction of the tire side portion 1d" is a projected surface of the tire side portion 1d when viewed as projected in the tire width direction, as in FIG. 1.

The communication device 10 is oriented so that the thickness direction TD of the communication device 10 approximately follows the tire width direction (FIG. 2 and FIG. 5).

During the production of the tire 1, the communication device 10 and a raw tire that forms the tire body 1M are placed within a tire-forming mold and vulcanization molded.

The decorative portion 14 either may be formed by performing a cutting operation on a raw tire that is obtained after vulcanization molding using the tire-forming mold, or may be formed by vulcanization molding using the tire-forming mold.

Here, the effects of each embodiment described herein are described.

First, as described above, in each embodiment described herein, the communication device 10 is embedded within the tire side portion 1d, as illustrated in FIG. 1, FIG. 2, and FIG. 5. Here, in general, a metal may weaken radio waves between the communication device 10 and the prescribed external device (for example, a reader or a reader/writer), thereby reducing the communication performance between the communication device 10 and the prescribed external device, which in turn may shorten a communication distance between the communication device 10 and the prescribed external device. On the other hand, for the tire body 1M, a metal (for example, steel) can be used for the carcass 5, the belt 6, the bead cores 4a, the reinforcement members 3, and the like. Then, in general, the tire side portion 1d tends to have less metal compared to the tread portion 1a. Therefore, by arranging the communication device 10 on the tire side portion 1d, the communication performance can be improved, thereby enabling lengthening of the communication distance between the communication device 10 and the prescribed external device compared to a case in which the communication device 10 is arranged in the tread portion 1a.

Additionally, as described above, in each embodiment described herein, by positioning the entirety of the communication device 10 within the decorative portion 14 in the plane projected in the tire width direction of the tire side portion 1d, as in FIG. **1****,** the decorative portion 14 that is easily visible from the outside has an indicator function that indicates the position of the communication device 10, and thus the position of the communication device 10 becomes easier to grasp. Therefore, a worker who attempts to read the communication device 10 with the prescribed external device (for example, a reader or a reader/writer) can read the communication device 10 simply by holding the above prescribed external device near the decorative portion 14, thereby facilitating the reading process. Additionally, the decorative portion 14 can decorate the tire 1, and thus can improve the appearance of the tire 1. In other words, the decorative portion 14 can have both a decorative function for the tire 1 and a position display function for the communication device 10.

Additionally, by positioning the entirety of the communication device 10 within the decorative portion 14 in the plane projected in the tire width direction of the tire side portion 1d, the load applied to the communication device 10 can be reduced, and thus the durability of the communication device can be improved because the fine irregularities that are formed on the decorative portion 14 impede distortions from concentrating near the decorative portion 14 during rolling and other movements of the tire 1.

Additionally, by positioning the entirety of the communication device 10 within the decorative portion 14 in the plane projected in the tire width direction of the tire side portion 1d, the outline (in particular, for example, when the communication device 10 has an RF tag 10e, the outline of the RF tag 10e) of the communication device 10, that is positioned on the tire width direction inner side with respect to the decorative portion 14 becomes less noticeable due to the fine irregularities that are formed on the decorative portion 14, and thus the appearance of the tire 1 can be improved. When the irregularities formed on the decorative portion 14 are not so fine (specifically, when the protrusion height of the protrusions Q exceeds 1.0 mm, and/or a case in which the spacings between the protrusions Q exceed 3.0 mm), the outline of the communication device 10 becomes more noticeable, and the appearance of the tire 1 may be reduced.

In each embodiment described herein, the alignment direction (orientation) of the communication device 10 is arbitrary, but in terms of the durability of the communication device 10, etc., the communication device 10 is preferably oriented so that the longitudinal direction LD of the communication device 10 approximately follows the tire circumferential direction as in the example in FIG. 1. However, the communication device 10 may be oriented so that the lateral direction LD of the communication device 10 approximately follows the tire circumferential direction.

In each embodiment described herein, the communication device 10 is preferably arranged in the sidewall portion 1b, as in each embodiment in FIG. 2 and FIG. 5. In general, the sidewall portion 1b tends to have less metal compared to the bead portion 1c. Therefore, by arranging the communication device 10 in the sidewall portion 1b, communication performance can be improved, thereby enabling lengthening of the communication distance between the communication device 10 and the prescribed external device compared to the communication device 10 being arranged in the bead portion 1c.

In each embodiment described herein, when the tire 1 is configured as a passenger vehicle pneumatic tire (FIG. 2), the tire radial direction outer end 10u of the communication device 10 (more preferably, the entirety of the communication device 10) is preferably further to the tire radial direction outer side than the tire radial direction outer end of the bead core 4a, more preferably further to the tire radial direction outer side than a tire radial direction center of the bead filler 4b, and, for example, preferably further to the tire radial direction outer side than a tire radial direction outer end 4bu of the bead filler 4b.

In each embodiment according to the present invention described herein, when the tire 1 is configured as a passenger vehicle pneumatic tire (FIG. 2) and the communication device 10 is arranged in the sidewall portion 1b as described above, the tire radial direction outer end 10u of the communication device 10 is positioned further to the tire radial direction inner side than the tire radial direction outer end 5e of the ply foldback portion 5T of the carcass 5 as in the example in FIG. 2. Accordingly, the communication performance can be improved, thereby enabling lengthening of the communication distance between the communication device 10 and the prescribed external device, and by being able to arrange the communication device 10 in a portion of the tire body 1M with comparatively less distortion during rolling and other movements of the tire 1, the durability of the communication device 10 and thus the tire 1 can also be improved.

A distance, in the tire radial direction, between the tire radial direction outer end 10u of the communication device 10 and the tire radial direction outer end 5e of the ply foldback portion 5T of the carcass 5 is preferably 3 to 30 mm, and more preferably 5 to 15 mm.

In each embodiment described herein, when the tire 1 is configured as a passenger vehicle pneumatic tire (FIG. 2), the tire radial direction outer end 5e of the ply foldback portion 5T of the carcass 5 is positioned further to the tire radial direction outer side than the tire radial direction outer end 4bu of the bead filler 4b, as in the example in FIG. 2. However, the tire radial direction outer end 5e of the ply foldback portion 5T of the carcass 5 may be positioned either in the same tire radial direction position as the tire radial direction outer end of the bead filler 4b, or further to the tire radial direction inner side.

In each embodiment described herein, when the tire 1 is configured as a passenger vehicle pneumatic tire (FIG. 2), the tire radial direction outer end 5e of the ply foldback portion 5T of the carcass 5 may be positioned further to the tire radial direction outer side than a tire maximum width position of the tire body 1M. The tire radial direction outer end 5e of the ply foldback portion 5T of the carcass 5 may be positioned in the same tire radial direction position as the tire maximum width position of the tire body 1M. The tire radial direction outer end 5e of the ply foldback portion 5T of the carcass 5 may be positioned further to the tire radial direction inner side than the tire maximum width position of the tire body 1M. Here, the "tire maximum width position of the tire body 1M" is a tire radial direction position at which the tire body 1M has the largest dimension in the tire width direction.

In each embodiment described herein, when the tire 1 is configured as a passenger vehicle pneumatic tire (FIG. 2), the communication device 10 preferably contacts the surface of the tire width direction outer side of the carcass 5, and more preferably contacts the surface of the tire width direction outer side of the ply foldback portion 5T of the carcass 5, as in the example in FIG. 2.

In each embodiment described herein, when the tire 1 is configured as a truck/bus pneumatic tire (FIG. 5), a tire radial direction center 10m of the communication device 10 (more preferably, the entirety of the communication device 10) is preferably further to the tire radial direction outer side than a tire radial direction outer end of the bead core 4a. Accordingly, the communication performance can be improved, thereby enabling lengthening of the communication distance between the communication device 10 and the prescribed external device.

In each embodiment described herein, when the tire 1 is configured as a truck/bus pneumatic tire (FIG. 5), the tire radial direction center 10m of the communication device 10 (more preferably, the entirety of the communication device 10) is preferably further to the tire radial direction outer side than a tire radial direction outer end 5e of the ply foldback portion 5T of the carcass 5. Accordingly, the communication performance can be improved, thereby enabling lengthening of the communication distance between the communication device 10 and the prescribed external device, and by being able to arrange the communication device 10 in a portion of the tire body 1M with comparatively less distortion during rolling and other movements of the tire 1, the durability of the communication device 10 and thus the tire 1 can also be improved.

Here, "tire radial direction outer end 5e of the ply foldback portion 5T of the carcass 5" refers to a tire radial direction outer end that is furthest to the tire radial direction outer side among the tire radial direction outer ends of the ply foldback portions 5T of each carcass ply 5a of the carcass 5.

In each embodiment described herein, when the tire 1 is configured as a truck/bus pneumatic tire (FIG. 5), the tire radial direction center 10m of the communication device 10 (more preferably, the entirety of the communication device 10) is preferably further to the tire radial direction outer side than the tire radial direction outer end 3u of the reinforcement member 3. Accordingly, the communication performance can be improved, thereby enabling lengthening of the communication distance between the communication device 10 and the prescribed external device, and by being able to arrange the communication device 10 in a portion of the tire body 1M with comparatively less distortion during rolling and other movements of the tire 1, the durability of the communication device 10 and thus the tire 1 can also be improved.

Here, "tire radial direction outer end 3u of the reinforcement member 3" refers to a tire radial direction outer end that is furthest to the tire radial direction outer side among the tire radial direction outer ends of each reinforcement ply 3a of the reinforcement member 3.

In each embodiment described herein, when the tire 1 is configured as a truck/bus pneumatic tire (FIG. 5), the tire radial direction center 10m of the communication device 10 (more preferably, the entirety of the communication device 10) is preferably further to the tire radial direction inner side than a tire radial direction outer end 4bu of the bead filler 4b. Accordingly, the communication performance can be improved, thereby enabling lengthening of the communication distance between the communication device 10 and the prescribed external device, and by being able to arrange the communication device 10 in a portion of the tire body 1M with comparatively less distortion during rolling and other movements of the tire 1, the durability of the communication device 10 and thus the tire 1 can also be improved.

A distance, in the tire radial direction, between the tire radial direction center 10m of the communication device 10 and the tire radial direction outer end 4bu of the bead filler 4b is preferably 1 to 30 mm, and more preferably 5 to 15 mm.

In each embodiment described herein, when the tire 1 is configured as a truck/bus pneumatic tire (FIG. 5), the tire radial direction outer end 5e of the ply foldback portion 5T of the carcass 5 is preferably positioned further to the tire radial direction inner side than the tire radial direction outer end 4bu of the bead filler 4b. The tire radial direction outer end 5e of the ply foldback portion 5T of the carcass 5 may be positioned either in the same tire radial position as the tire radial direction outer end 4bu of the bead filler 4b or further to the tire radial direction outer side.

In each embodiment described herein, when the tire 1 is configured as a truck/bus pneumatic tire (FIG. 5), the tire radial direction outer end 3u of the reinforcement member 3 is preferably positioned further to the tire radial direction inner side than the tire radial direction outer end 4bu of the bead filler 4b. The tire radial direction outer end 3u of the reinforcement member 3 may be positioned either in the same tire radial position as the tire radial direction outer end 4bu of the bead filler 4b or further to the tire radial direction outer side.

In each embodiment described herein, when the tire 1 is configured as a truck/bus pneumatic tire (FIG. 5), the tire radial direction outer end 5e of the ply foldback portion 5T of the carcass 5 may be positioned further to the tire radial direction inner side than a tire maximum width position of the tire body 1M as in the example in FIG. 5. The tire radial direction outer end 5e of the ply foldback portion 5T of the carcass 5 may be positioned in the same tire radial position as the tire maximum width position of the tire body 1M. The tire radial direction outer end 5e of the ply foldback portion 5T of the carcass 5 may be positioned further to the tire radial direction outer side than the tire maximum width position of the tire body 1M.

Here, the "tire maximum width position of the tire body 1M" is a tire radial direction position at which the tire body 1M has the largest dimension in the tire width direction.

In each embodiment described herein, when the tire 1 is configured as a truck/bus pneumatic tire (FIG. 5), the tire radial direction outer end 3u of the reinforcement member 3 may be positioned further to the tire radial direction inner side than a tire maximum width position of the tire body 1M as in the example in FIG. 5. The tire radial direction outer end 3u of the reinforcement member 3 may be positioned in the same tire radial position as the tire maximum width position of the tire body 1M. The tire radial direction outer end 3u of the reinforcement member 3 may be positioned further to the tire radial direction outer side than a tire maximum width position of the tire body 1M.

In each embodiment described herein, when the tire 1 is configured as a truck/bus pneumatic tire (FIG. 5), the communication device 10 preferably contacts a surface of the tire width direction outer side of the bead filler 4b, as in the example in FIG. 5.

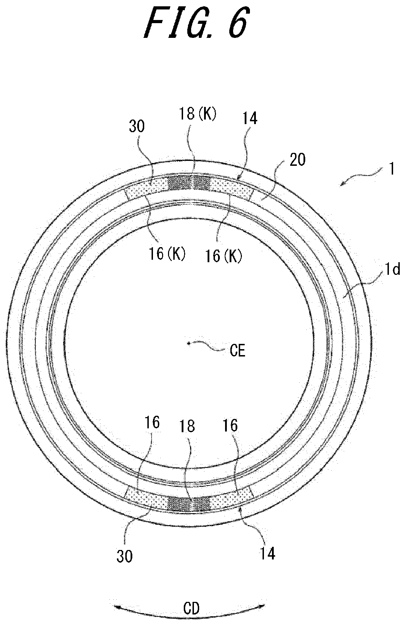

Various modifications to the decorative portion 14 and the patterned region K are described below with reference to FIG. 6 to FIG. 36.

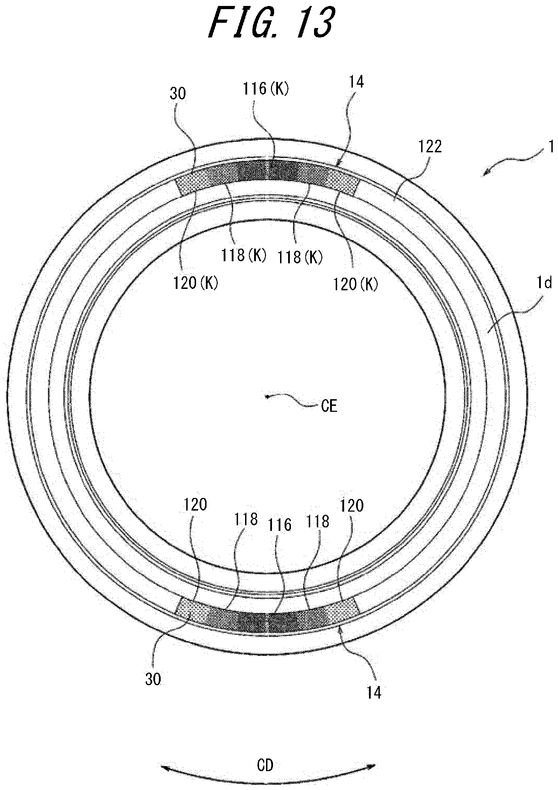

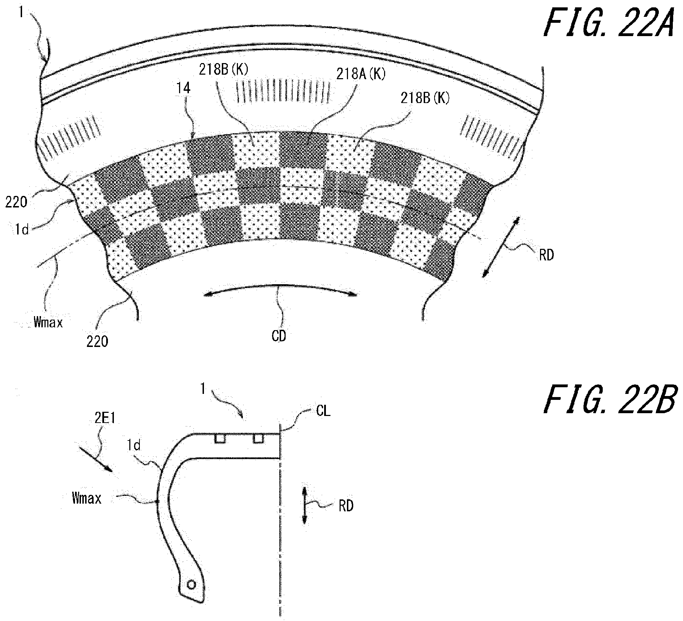

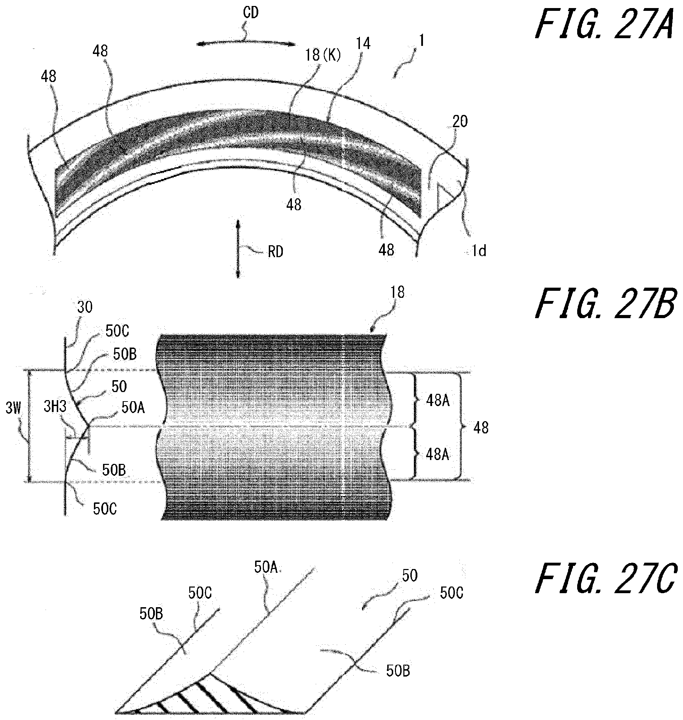

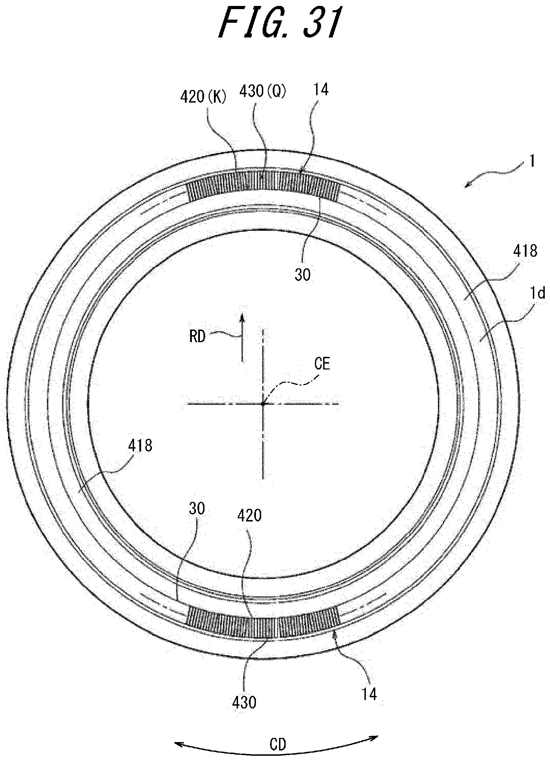

FIG. 6 to FIG. 12 are drawings for describing a tire 1 according to a third embodiment of the present invention. FIG. 13 to FIG. 21 are drawings for describing a tire 1 according to a fourth embodiment of the present invention. FIG. 22 to FIG. 26 are drawings for describing a tire 1 according to a fifth embodiment of the present invention. FIG. 27 to FIG. 30 are drawings for describing a tire 1 according to a sixth embodiment of the present invention. FIG. 31 to FIG. 36 are drawings for describing a tire 1 according to a seventh embodiment of the present invention. The configurations of the decorative portion 14 and the patterned region K of each embodiment in FIG. 6 to FIG. 36 are respectively different. However, in each embodiment in FIG. 6 to FIG. 36, as in each embodiment described above with reference to FIG. 1 to FIG. 5, the tire body 1M, includes a decorative portion, which has a base surface 30 that is formed on a tire outer surface of the tire side portion 1d, and one or more patterned regions K disposed on the decorative portion 14. In each patterned region K, multiple protrusions Q are formed. These multiple protrusions Q protrude from the base surface 30 of the decorative portion 14 with a protrusion height of 0.1 mm or greater and 1.0 mm or less. The spacing between these multiple protrusions Q is 0.1 mm or greater and 3.0 mm or less. The base surface 30 forms a bottom surface of the decorative portion 14. The tire body 1M may include only one decorative portion 14, or the tire body 1M may include multiple decorative portions 14.

In FIG. 6 to FIG. 36, the communication device 10 is omitted for convenience. However, in each embodiment in FIG. 6 to FIG. 36, the tire 1 includes the communication device 10, the entirety of the communication device 10 is embedded within the tire side portion 1d of the tire body 1m, and the entirety of the communication device 10 is positioned within the decorative portion 14 in the plane projected in the tire width direction of the tire side portion 1d.

The tire 1 according to the third embodiment of the present invention is described below with reference to FIG. 6 to FIG. 12.

For the tire 1 of the third embodiment, the one or more patterned regions K that are disposed on the decorative portion 14 include a first patterned region K. In the first patterned region K, multiple first protrusions Q protrude from the base surface 30 of the decorative portion 14 with a protrusion height of 0.1 mm or greater and 1.0 mm or less and are formed at a spacing of greater than 1.0 mm and 3.0 mm or less.

As illustrated in FIG. 6, the decorative portion 14 is formed on the tire side portion 1d of the tire 1. The decorative portion 14 is arc-shaped, as viewed from an axial direction of the tire 1, and is arranged at two symmetrical positions across a tire center axis CE. Furthermore, the base surface 30 is formed on the decorative portion 14 on the tire side portion 1d. The base surface 30 is recessed with respect to other regions 20 that are regions other than the decorative portion 14 and are regions in which no protrusions or the like are formed. The base surface 30 forms a bottom surface of the decorative portion 14 and is a curved surface that is convex on the outer side in the width direction of the tire 1 as viewed from the tire circumferential direction. In the present embodiment, the base surface 30 is recessed by 0.4 (mm) with respect to the other regions 20.

Furthermore, on the decorative portion 14, a low brightness region 18 (K) that is lower in brightness compared to the other regions 20 and appears black and medium brightness regions 16 (K) that are lower in brightness compared to the other regions 20, higher in brightness compared to the low brightness region 18, and appear gray are formed. In other words, the decorative portion 14 is formed by the low brightness region 18 and the medium brightness regions 16. The medium brightness regions 16 are an example of the first patterned region (patterned region) K, and the low brightness region 18 is an example of a second patterned region (patterned region) K.

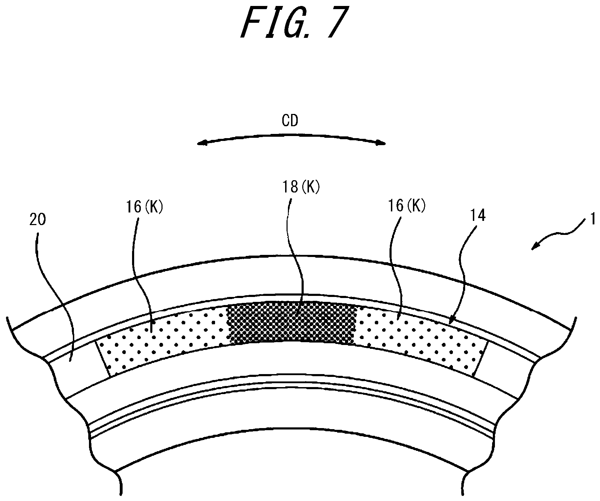

Then, as illustrated in FIG. 7, the low brightness region 18 that is formed on the decorative portion 14 extends in the tire circumferential direction, and the medium brightness regions 16 is arranged respectively at both ends of the low brightness region 18 in the tire circumferential direction.

The low brightness region 18 and the medium brightness regions 16 are formed by disposing irregularities in portions in the tire-forming mold for forming the tire 1. These portions in the tire-forming mold correspond to the low brightness region 18 and the medium brightness regions 16. Additionally, the low brightness region 18 and the medium brightness regions 16 are preferably arranged further to the outer side in the tire radial direction than the tire maximum width position (a part with maximum linear distance between the tire side portions) in terms of visibility when the tire 1 is installed on a vehicle.

### (Low Brightness Region 18)

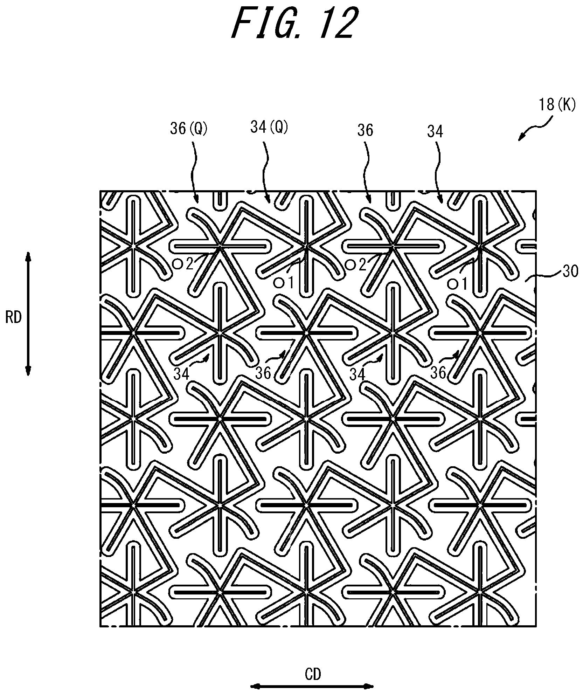

The low brightness region 18 has multiple asterisk-shaped protrusions (hereafter, "asterisk protrusions") Q that protrude from the base surface 30, as illustrated in FIG. 12. Specifically, the low brightness region 18 has multiple first asterisk protrusions 34 (Q) and multiple second asterisk protrusions 36 (Q). Then, the first asterisk protrusions 34 and the second asterisk protrusions 36 are alternately arranged in the tire circumferential direction and the tire radial direction. The first asterisk protrusions 34 and the second asterisk protrusions 36 are an example of second protrusions (protrusions) Q.

### [First Asterisk Protrusions 34]

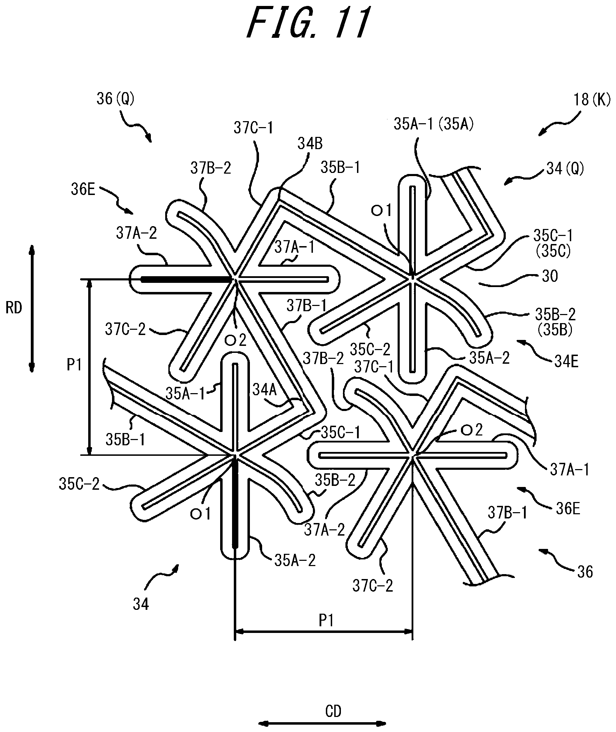

The first asterisk protrusions 34 are formed of first extension portions 35A-1, 35A-2, second extension portions 35B-1, 35B-2, and third extension portions 35C-1, 35C-2 that extend in respectively different directions from a center O1 as a base point as viewed orthogonally to the base surface 30 (for example, in a rotation axis direction of the tire 1), as illustrated in FIG. 11. Hereafter, these six extension portions may also be referred to collectively as "extension portions 34E". Then, a line shape that is bent at the center O1 is formed by an extension portion 34E and another extension portion 34E (apart from those that extend from the center O1 in directions opposite from each other).

The first extension portion 35A-1 and the first extension portion 35A-2 extend from the center O1 in directions opposite from each other, and a continuous linear shape is formed by the first extension portion 35A-1 and the first extension portion 35A-2. The first extension portion 35A-1 extends from the center O1 to the outer side in the tire radial direction, and the first extension portion 35A-2 extends from the center O1 to the inner side in the tire radial direction. Then, the first extension portion 35A-1 and the first extension portion 35A-2 are of similar length. Hereafter, the first extension portion 35A-1 and the first extension portion 35A-2 may also be referred to collectively as "first extension portions 35A".

The second extension portion 35B-1 and the second extension portion 35B-2 extend from the center O1 in directions opposite from each other, and a continuous linear shape is formed by the second extension portion 35B-1 and the second extension portion 35B-2. The second extension portion 35B-1 and the second extension portion 35B-2 are inclined with respect to the tire circumferential direction so that an end on one side (left side in the drawing) in the tire circumferential direction is positioned on the outer side in the tire radial direction compared to an end on the other side (right side in the drawing).

The second extension portion 35B-1 extends from the center O1 to a side in the tire circumferential direction, and the second extension portion 35B-2 extends from the center O1 to another side in the tire circumferential direction. Then, the second extension portion 35B-1 is longer compared to the second extension portion 35B-2. Furthermore, the leading-edge portion of the second extension portion 35B-2 curves to the inner side in the tire radial direction. Hereafter, the second extension portion 35B-1 and the second extension portion 35B-2 may also be referred to collectively as "second extension portions 35B".

The third extension portion 35C-1 and the third extension portion 35C-2 extend from the center O1 in directions opposite from each other, and a continuous linear shape is formed by the third extension portion 35C-1 and the third extension portion 35C-2. The third extension portion 35C-1 and the third extension portion 35C-2 are inclined with respect to the tire circumferential direction so that an end on one side (left side in the drawing) in the tire circumferential direction is positioned on the inner side in the tire radial direction compared to an end on the other side (right side in the drawing).

The third extension portion 35C-1 extends from the center O1 to the other side in the tire circumferential direction, and the third extension portion 35C-2 extends from the center O1 to the side of the tire circumferential direction. Then, the third extension portion 35C-1 is shorter compared to the third extension portion 35C-2. Hereafter, the third extension portion 35C-1 and the third extension portion 35C-2 may also be referred to collectively as "third extension portions 35C".

The six extension portions 34E are angled at 60° respectively to adjacent extension portions 34E. The first asterisk protrusions 34, in other words, have a shape of the six extension portions 34E that extend radially from the center O1.

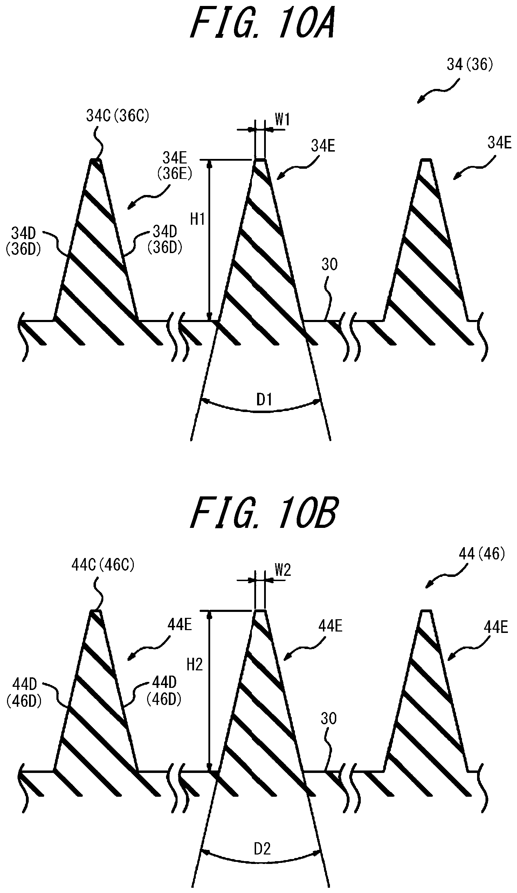

As illustrated in FIG. 10A, for the extension portions 34E of the first asterisk protrusions 34, a cross section in a direction orthogonal to the extension direction is isosceles triangle shaped with a flat top surface 34C. In other words, the first asterisk protrusions 34 have a top surface 34C and a pair of side surfaces 34D. In the present embodiment, the width of the top surface 34C (W1 in the drawing) is 0.02 [mm], and the apex angle of the first asterisk protrusions 34 is 26 [degrees] (D1 in the drawing). Additionally, the height (H1 in the drawing) of the first asterisk protrusions 34 is a predetermined value of 0.1 [mm] or greater and 1.0 [mm] or less. When a height of the protrusions (protrusion height) is less than 0.1 [mm], forming the protrusions becomes difficult, and it may not be possible to lower the brightness sufficiently to attenuate the incident light to an extent that the protrusions appear black (see below for details). Furthermore, by making the height of the protrusions 1.0 [mm] or less, the difference between the rigidity of a protrusion and the rigidity in the vicinity of the protrusion is reduced, so that local stress concentration is reduced.

The height of the protrusions and dimensions such as the spacing (pitch) between the protrusions, which are described later, in the present embodiment can be measured using, for example, a VR-3000 series one-shot 3D shape measuring machine by Keyence Corporation.

### [Second Asterisk Protrusions 36]

The second asterisk protrusions 36 have the same shape as the first asterisk protrusions 34, as illustrated in FIG. 11. Specifically, the second asterisk protrusions 36 have the shape of a first asterisk protrusion 34 that is rotated 90 [degrees] clockwise centered on the center O1, as viewed orthogonally to the base surface 30, after which the shape of the first asterisk protrusion 34 that is rotated 90 [degrees] centered on the center O1 is inverted top to bottom.

For the second asterisk protrusions 36, portions that correspond to the first extension portions 35A-1, 35A-2, the second extension portions 35B-1, 35B-2, the third extension portions 35C-1, 35C-2, and the center O1 of the first asterisk protrusions 34 are referred to as first extension portions 37A-1, 37A-2, second extension portions 37B-1, 37B-2, third extension portions 37C-1, 37C-2, and a center O2. Hereafter, the six aforementioned extension portions may also be referred to collectively as "extension portions 36E".

Additionally, for the second asterisk protrusions 36, the portion that corresponds to the top surface 34C of the first asterisk protrusions 34 is referred to as a top surface 36C. Furthermore, for the second asterisk protrusions 36, portions that correspond to the side surfaces 34D of the first asterisk protrusions 34 are referred to as side surfaces 36D (refer to FIG. 10A).

### [Others]

As illustrated in FIG. 11 and FIG. 12, the first asterisk protrusions 34 and the second asterisk protrusions 36 are alternately arranged in the tire circumferential direction and the tire radial direction, filling the entirety of the low brightness region 18 (refer to FIG. 7).

Then, the respective tips of the first extension portions 35A-1, 35A-2 of the first asterisk protrusions 34 are respectively inserted between the second extension portion 37B-1 and the third extension portion 37C-2, which are adjacent in the tire radial direction, and between the second extension portion 37B-2 and the third extension portion 37C-1, which are adjacent in the tire radial direction, of the second asterisk protrusions 36. Additionally, the respective tips of the first extension portions 37A-1, 37A-2 of the second asterisk protrusions 36 are inserted between the second extension portion 35B-1 and the third extension portion 35C-2, which are adjacent in the tire circumferential direction, and between the second extension portion 35B-2 and the third extension portion 35C-1, which are adjacent in the tire circumferential direction, of the first asterisk protrusions 34.

Furthermore. the tip of the third extension portion 35C-1 of the first asterisk protrusions 34 is connected to the tip of the second extension portion 37B-1 of the second asterisk protrusions 36 that are arranged on the outer side in the tire radial direction relative to the first asterisk protrusions 34. Accordingly, a connecting portion 34A is formed. Furthermore, the tip of the second extension portion 35B-1 of the first asterisk protrusions 34 is connected to the tip of the third extension portion 37C-1 of the second asterisk protrusions 36 that are arranged on a side in the tire circumferential direction relative to the first asterisk protrusions 34. Accordingly, a connecting portion 34B is formed.

In this configuration, the first asterisk protrusions 34 and the second asterisk protrusions 36 are connected in a staircase-shape from the inner side to the outer side in the tire radial direction via the connecting portions 34A, 34B.

Additionally, for the first asterisk protrusions 34 and the second asterisk protrusions 36 that are adjacent to each other in the tire radial direction and the tire circumferential direction, the spacing (hereafter, "spacing P1") between the center O1 and the center O2 is a predetermined value of 0.1 [mm] or greater and 1.0 [mm] or less. When the spacing P1 is less than 0.1 [mm], forming the protrusions becomes difficult. Furthermore, when the spacing P1 is greater than 1.0 [mm], lowering the brightness sufficiently to attenuate the incident light to an extent that the protrusions appear black may not be possible (see below for details).

Here, the low brightness region 18 that appears black and is described in the present embodiment is a region that has a brightness value L* of less than 10 for example, as measured with a handy spectrophotometer (NF333) from Nippon Denshoku Industries Co., Ltd.

### (Medium Brightness Regions 16)

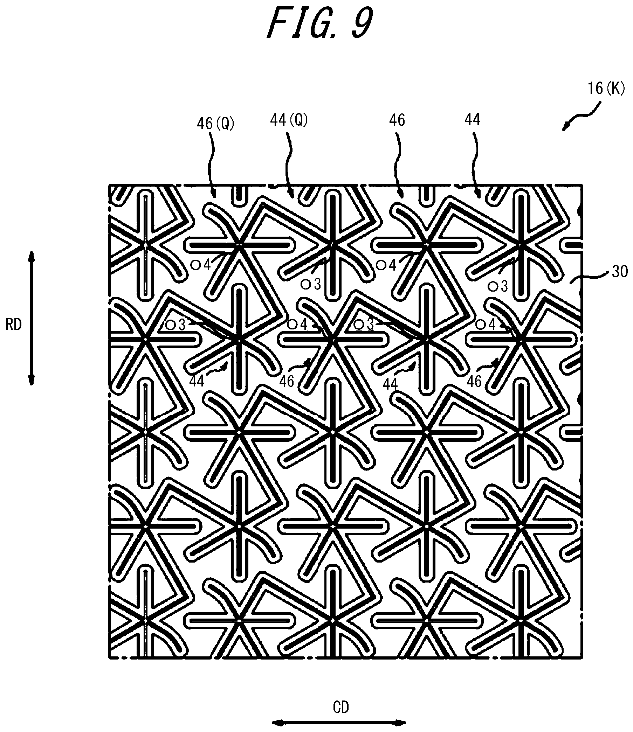

The medium brightness regions 16 have multiple asterisk-shaped protrusions (asterisk protrusions) Q that protrude from the base surface 30, as illustrated in FIG. 9. Specifically, the medium brightness regions 16 have multiple first asterisk protrusions 44 (Q) and multiple second asterisk protrusions 46 (Q). Then, the first asterisk protrusions 44 and the second asterisk protrusions 46 are alternately arranged in the tire circumferential direction and the tire radial direction. The first asterisk protrusions 44 and the second asterisk protrusions 46 are an example of first protrusions (protrusions) Q.

### [First Asterisk Protrusions 44]

The first asterisk protrusions 44 are described mainly with regard to portions that differ from the first asterisk protrusions 34 in the low brightness region 18 (refer to FIG. 11).

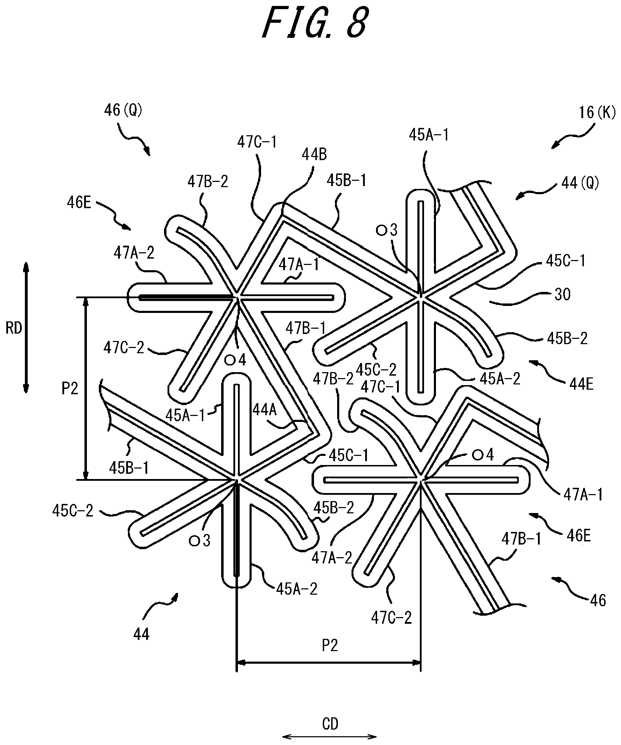

As illustrated in FIG. 8, the first asterisk protrusions 44 are similar in shape to the first asterisk protrusions 34 (refer to FIG. 11) in the low brightness region 18 as viewed orthogonally to the base surface 30. For the first asterisk protrusions 44, portions that correspond to the first extension portions 35A-1, 35A-2, the second extension portions 35B-1, 35B-2, the third extension portions 35C-1, 35C-2, and the center O1 of the first asterisk protrusions 34 are referred to as first extension portions 45A-1, 45A-2, second extension portions 45B-1, 45B-2, third extension portions 45C-1, 45C-2, and a center O3. Hereafter, the six aforementioned extension portions may also be referred to collectively as "extension portions 44E". The lengths of the extension directions of the respective extension portions 44E are the lengths of the respective extension portions 34E of the first asterisk protrusions 34 that have been lengthened in the extension direction by the same proportion.

As illustrated in FIG. 10B, for the extension portions 44E of the first asterisk protrusions 44, a cross section in a direction orthogonal to the extension direction is isosceles triangle shaped with a flat top surface 44C. In other words, the first asterisk protrusions 44 have a top surface 44C and a pair of side surfaces 44D. In the present embodiment, the top surface 44C (W2 in the drawing) has a width of 0.02 [mm], and the first asterisk protrusions 44 has an apex angle of 26 [degrees] (D2 in the drawing). Additionally, the height (H2 in the drawing) of the first asterisk protrusions 44 is a predetermined value of 0.1 [mm] or greater and 1.0 [mm] or less. When the height of the protrusions is less than 0.1 [mm], forming the protrusions becomes difficult, and lowering the brightness sufficiently to attenuate the incident light to an extent that the protrusions appear gray may not be possible (see below for details). Furthermore, by making the height of the protrusions 1.0 [mm] or less, the difference between the rigidity of a protrusion and the rigidity in the vicinity of the protrusion is reduced, so that local stress concentration is reduced.

### [Second Asterisk Protrusions 46]

As illustrated in FIG. 8, the second asterisk protrusions 46 have the same shape as the first asterisk protrusions 44. Specifically, the second asterisk protrusions 46 have the shape of a first asterisk protrusion 44 that is rotated 90 [degrees] clockwise centered on the center O3, as viewed orthogonally to the base surface 30, after which the shape of the first asterisk protrusion 44 that is rotated 90 [degrees] centered on the center O3 is inverted top to bottom.

For the second asterisk protrusions 46, portions that correspond to the first extension portions 45A-1, 45A-2, the second extension portions 45B-1, 45B-2, the third extension portions 45C-1, 45C-2, and the center O3 of the first asterisk protrusions 44 are referred to as first extension portions 47A-1, 47A-2, second extension portions 47B-1, 47B-2, third extension portions 47C-1, 47C-2, and a center O4. Hereafter, the six aforementioned extension portions may also be referred to collectively as "extension portions 46E".

Additionally, for the second asterisk protrusions 46, the portion that corresponds to the top surface 44C of the first asterisk protrusions 44 is referred to as a top surface 46C. Furthermore, for the second asterisk protrusions 46, portions that correspond to the side surfaces 44D of the first asterisk protrusions 44 are referred to as side surfaces 46D (refer to FIG. 10B).

### [Others]

As illustrated in FIG. 8, the first asterisk protrusions 44 and the second asterisk protrusions 46 are alternately arranged in the tire circumferential direction and the tire radial direction, filling the entirety of the medium brightness regions 16 (refer to FIG. 7).

Then, the respective tips of the first extension portions 45A-1, 45A-2 of the first asterisk protrusions 44 are respectively inserted between the second extension portion 47B-1 and the third extension portion 47C-2, which are adjacent in the tire radial direction, and between the second extension portion 47B-2 and the third extension portion 47C-1, which are adjacent in the tire radial direction, of the second asterisk protrusions 46. Additionally, the respective tips of the first extension portions 47A-1, 47A-2 of the second asterisk protrusions 46 are inserted between the second extension portion 45B-1 and the third extension portion 45C-2, which are adjacent in the tire circumferential direction, and between the second extension portion 45B-2 and the third extension portion 45C-1, which are adjacent in the tire circumferential direction, of the first asterisk protrusions 44.

Additionally, the tip of the third extension portion 45C-1 of the first asterisk protrusions 44 is connected to the tip of the second extension portion 47B-1 of the second asterisk protrusions 46 that are arranged on the outer side in the tire radial direction relative to the first asterisk protrusions 44. Accordingly, a connecting portion 44A is formed. Furthermore, the tip of the second extension portion 45B-1 of the first asterisk protrusions 44 is connected to the tip of the third extension portion 47C-1 of the second asterisk protrusions 46 that are arranged on a side in the tire circumferential direction relative to the first asterisk protrusions 44. Accordingly, a connecting portion 44B is formed.

In this configuration, the first asterisk protrusions 44 and the second asterisk protrusions 46 are connected in a staircase-shape from the inner side to the outer side in the tire radial direction via the connecting portion 44A and the connecting portion 44B.

Additionally, for the first asterisk protrusions 44 and the second asterisk protrusions 46 that are adjacent to each other in the tire radial direction and the tire circumferential direction, the spacing (hereafter, "spacing P2") between the center O3 and the center O4 is a predetermined value of greater than 1.0 [mm] and 3.0 [mm] or less. When the spacing P2 is 1.0 [mm] or less, the incident light may be excessively attenuated, and the brightness may be lowered to the extent that the protrusions appear black (see below for details). Furthermore, when the spacing P2 is greater than 3.0 [mm], it may not be possible to lower the brightness sufficiently to attenuate the incident light to an extent that the protrusions appear gray (see below for details).

Here, the medium brightness regions 16 that appear gray and are described in the present embodiment are regions that have a brightness value L* of 10 or greater and 20 or less for example, as measured with a handy spectrophotometer (NF333) from Nippon Denshoku Industries Co., Ltd. Additionally, the other regions 20 (the regions in which no protrusions are formed), other than the decorative portion 14, on the tire side portion 1d is a region that has a brightness value L* of greater than 20 for example, as measured with a handy spectrophotometer (NF333) from Nippon Denshoku Industries Co., Ltd. In other words, the medium brightness regions 16 that appear gray are regions that have a relative brightness of approximately medium on an outer surface of the tire 1.

### (Action and Effect)

Next, the actions and effects of the decorative portion 14 and the patterned region K of the tire 1 according to the third embodiment are described.

In the low brightness region 18 of the decorative portion 14 of the tire side portion 1d, light that is incident on the first asterisk protrusions 34 and the second asterisk protrusions 36 that are formed in the low-brightness region 18 hits the side surfaces 34D and the side surfaces 36D as illustrated in FIG. 10A. Then, the light that was incident attenuates while repeatedly reflecting between the side surfaces 34D, 36D that face each other and is reflected to the outer side.

Additionally, in the medium brightness regions 16 of the decorative portion 14 of the tire side portion 1d, light that is incident on the first asterisk protrusions 44 and the second asterisk protrusions 46 that are formed in the medium-brightness regions 16 hits the side surfaces 44D and the side surfaces 46D as illustrated in FIG. 10B. Then, the light that was incident attenuates while repeatedly reflecting between the side surfaces 44D, 46D that face each other and is reflected to the outer side.

Furthermore, in the other regions 20, in which no protrusions are formed, of the tire side portion 1d, light that is incident on the other regions 20 is reflected to the outer side by an outer surface that forms the other regions 20.

Here, the spacing P1 between the first asterisk protrusions 34 and the second asterisk protrusions 36 that are formed in the low brightness region 18 is a predetermined value of 0.1 [mm] or greater and 1.0 [mm] or less. In contrast, the spacing P1 between the first asterisk protrusions 44 and the second asterisk protrusions 46 that are formed in the medium brightness regions 16 is a predetermined value of greater than 1.0 [mm] and 3.0 [mm] or less. In other words, the density of protrusions formed in the medium brightness regions 16 is lower than the density of protrusions formed in the low brightness region 18.

Furthermore, the apex angles of the respective protrusions are similar, and thus the proportion of the base surface 30 of the medium brightness regions 16 per unit area is larger than the proportion of the base surface 30 of the low brightness region 18 per unit area.

Accordingly, the amount of light reflected to the outer side at the medium brightness regions 16 is greater compared to the amount of light reflected to the outer side at the low brightness region 18. Furthermore, the amount of light that is reflected to the outer side at the medium brightness regions 16 is less compared to the amount of light that is reflected to the outer side at the other regions 20 in which no protrusions are formed. In other words, the low brightness region 18, the medium brightness regions 16, and the other regions 20, in this order, increase in brightness L*.

Therefore, the low brightness region 18 appears relatively black compared to other regions, the other regions 20 appear relatively white compared to other regions, and the medium brightness regions 16 appear to be relatively gray compared to other regions.

By making the spacing P2 between the first asterisk protrusions 44 and the second asterisk protrusions 46 to be greater than 1.0 [mm] and 3.0 [mm] or less, a medium brightness region 16 can be formed that is lower in brightness compared to the other regions 20, higher in brightness compared to the low brightness region 18, and appears gray. Accordingly, the range of expression of the decorative portion 14 that has regions on which protrusions are formed can be increased (the number of modalities can be increased) on the tire 1.

Additionally, the respective extension portions 44E of the first asterisk protrusions 44 extend in different directions, and the respective extension portions 46E of the second asterisk protrusions 46 extend in different directions. Accordingly, differences in appearance of the medium brightness regions 16 can be reduced even when viewing the medium brightness regions 16 at different viewing angles. The same action is achieved for the low brightness region 18.

Additionally, the first asterisk protrusions 44 that are formed in the medium brightness regions 16 are formed of six extension portions 44E that extend in respectively different directions and are connected by a center O3. The second asterisk protrusions 46 are formed of six extension portions 46E that each extend in respectively different directions and are connected by a center O4. Therefore, the first asterisk protrusions 44 and the second asterisk protrusions 46 respectively become less likely to collapse, which can improve the respective durability of the first asterisk protrusions 44 and the second asterisk protrusions 46. The same action is achieved for the first asterisk protrusions 34 and the second asterisk protrusions 36.

Additionally, the low brightness region 18 is formed in close proximity to the medium brightness regions 16. Accordingly, a low brightness region 18 that appears relatively black compared to the other regions 20, medium brightness regions 16 that appear relatively gray compared to the other regions 20, and the other regions 20 that appear relatively white compared to the low brightness region 18 are arranged in a line. Therefore, gradual changes in brightness L* (gradation effect) can be expressed.

Additionally, the first asterisk protrusions 44 and the second asterisk protrusions 46 are connected to each other in a staircase-shape via the connecting portions 44A, 44B. Accordingly, the first asterisk protrusions 44 and the second asterisk protrusions 46 can support each other via the connecting portion 44A and the connecting portion 44B, preventing the first asterisk protrusions 44 and second asterisk protrusions 46 from collapsing, thereby improving durability.

A tire 1 according to the fourth embodiment of the present invention is described below, with reference to FIG. 13 to FIG. 21.

For the tire 1 of the fourth embodiment, the tire 1 includes multiple patterned regions K in the decorative portion 14, the multiple patterned regions K include a first patterned region K and a second patterned region K. In the first patterned region K, multiple first protrusions Q that protrude with a protrusion height of a predetermined value of 0.1 mm or greater and 1.0 mm or less from the base surface 30 of the decorative portion 14 are formed at spacings of a predetermined value of 0.1 mm or greater and 1.0 mm or less. In the second patterned region K, multiple second protrusions Q that protrude with a protrusion height of a predetermined value of 0.1 mm or greater and 1.0 mm or less from the base surface 30 of the decorative portion 14 are formed at spacings of a predetermined value of 0.1 mm or greater and 1.0 mm or less. The spacing of the respective first protrusions Q and the spacing of the respective second protrusions Q are similar, and the protrusion height of the first protrusions Q and the protrusion height of the second protrusions Q are different.

As illustrated in FIG. 13, the tire side portion 1d of the tire 1 has a decorative portion 14 formed thereon. The decorative portion 14 is arc-shaped, as viewed from an axial direction of the tire 1, and is arranged at two symmetrical positions across a tire center axis CE. Furthermore, the base surface 30 is formed on the decorative portion 14 on the tire side portion 1d. The base surface 30 is recessed with respect to other regions 122, which are regions other than the decorative portion 14 on the tire side portion 1d and are regions in which no protrusions or the like are formed. The base surface 30 forms a bottom surface of the decorative portion 14 and is a curved surface that that is convex on the outer side in the width direction of the tire 1 as viewed from the tire circumferential direction. In the present embodiment, the base surface 30 is recessed by 0.4 (mm) with respect to the other regions 122.

Furthermore, on the decorative portion 14, a first low brightness region 116 (K) that appears black, second low brightness regions 118 (K), and third low brightness regions 120 (K), that have a lower brightness than the other regions 122, are formed. In other words, the first low brightness region 116, the second low brightness regions 118, and the third low brightness regions 120 form the decorative portion 14. The first low brightness region 116 is an example of the first patterned region (patterned region) K. The second low brightness regions 118 are an example of the second patterned region (patterned region) K. The third low brightness regions 120 are an example of the third patterned region (patterned region) K.

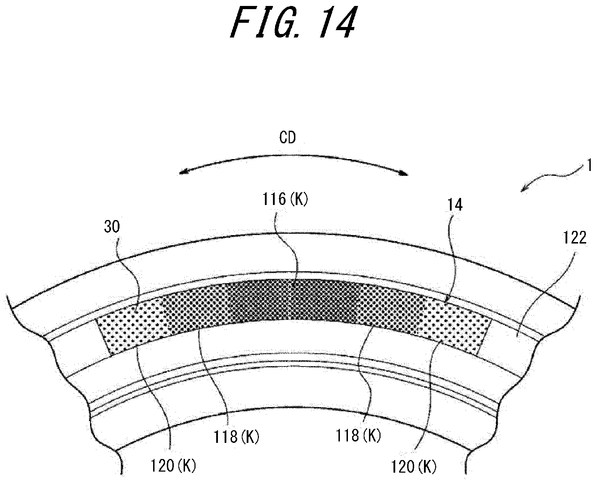

Then, as illustrated in FIG. 14, the first low brightness region 116 extends in the tire circumferential direction, and a second brightness regions 118 are arranged respectively on both ends of the first low brightness region 116 in the tire circumferential direction. Furthermore, the third low brightness regions 120 are arranged respectively across the second low brightness regions 118, on opposite sides from the first low brightness region 116. Thus, the first low brightness region 116 and the second low brightness regions 118 are arranged in close proximity, and the second low brightness regions 118 and the third low brightness regions 120 are also arranged in close proximity.

The first low brightness region 116, the second low brightness regions 118, and the third low brightness regions 120 are formed by disposing irregularities in portions in the tire-forming mold for forming the tire 1 that correspond to the first low brightness region 116, the second low brightness regions 118, and the third low brightness regions 120. Additionally, the first low brightness region 116, the second low brightness regions 118, and the third low brightness regions 120 are preferably arranged further to the outer side in the tire radial direction than the tire maximum width position (for example, the part with maximum linear distance between the tire side portions) in terms of visibility when the tire 1 is installed on a vehicle.

### (First Low Brightness Region 116)

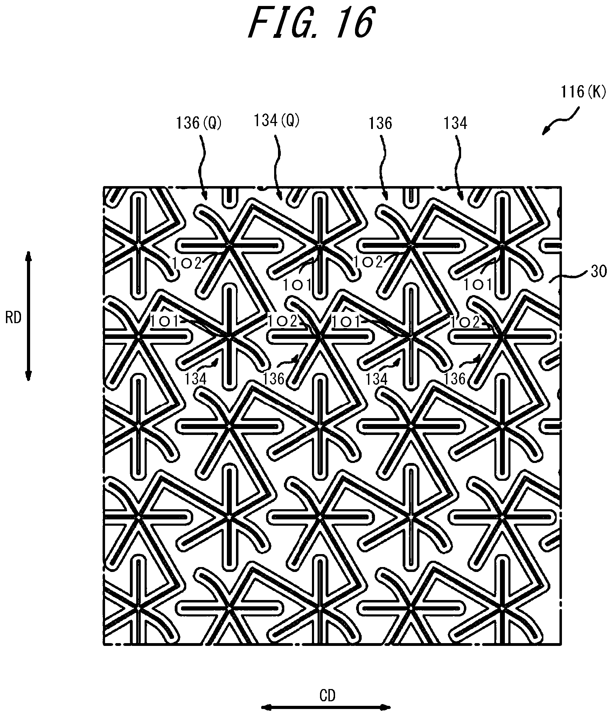

The first low brightness region 116 has multiple asterisk-shaped protrusions (hereafter, "asterisk protrusions") Q that protrude from the base surface 30, as illustrated in FIG. 16. Specifically, the first low brightness region 18 has multiple first asterisk protrusions 134 (Q) and multiple second asterisk protrusions 136 (Q). Then, the first asterisk protrusions 134 and the second asterisk protrusions 136 are alternately arranged in the tire circumferential direction and the tire radial direction. The first asterisk protrusions 134 and the second asterisk protrusions 136 are an example of the first protrusions (protrusions) Q.

### [First Asterisk Protrusions 134]

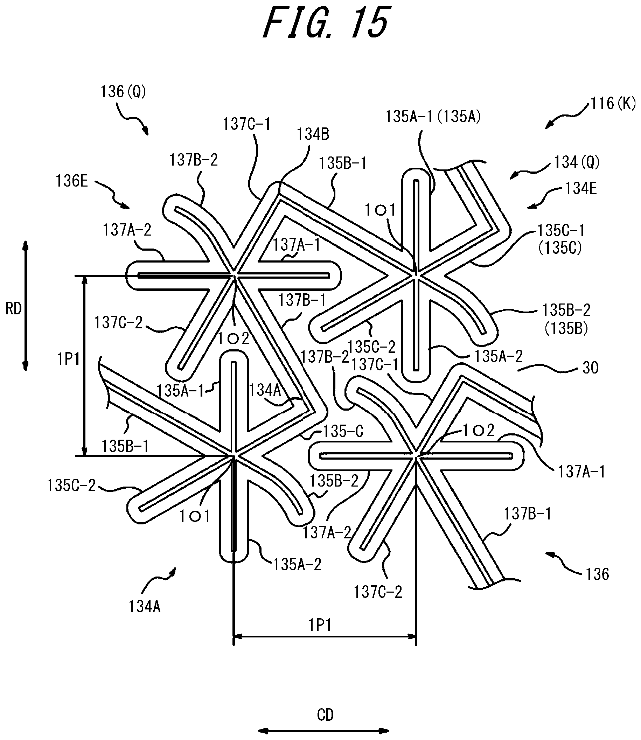

The first asterisk protrusions 134 are formed of first extension portions 135A-1, 135A-2, second extension portions 135B-1, 135B-2, and third extension portions 135C-1, 135C-2 that extend in respectively different directions from a center 1O1 as a base point as viewed orthogonally to the base surface 30 (in a rotation axis direction of the tire 1), as illustrated in FIG. 15. Hereafter, these six extension portions may also be referred to collectively as "extension portions 134E". A line shape that is bent at the center 1O1 is formed by an extension portion 134E and another extension portion 134E (apart from those that extend from the center 1O1 in directions opposite from each other).

The first extension portion 135A-1 and the first extension portion 135A-2 extend from the center 1O1 in directions opposite from each other, and a continuous linear shape is formed by the first extension portion 135A-1 and the first extension portion 135A-2. The first extension portion 135A-1 extends from the center 1O1 to the outer side in the tire radial direction, and the first extension portion 135A-2 extends from the center 1O1 to the inner side in the tire radial direction. Then, the first extension portion 135A-1 and the first extension portion 135A-2 are of similar length. Hereafter, the first extension portion 135A-1 and the first extension portion 135A-2 may also be referred to collectively as "first extension portions 135A".

The second extension portion 135B-1 and the second extension portion 135B-2 extend from the center 1O1 in directions opposite from each other, and a continuous linear shape is formed by the second extension portion 135B-1 and the second extension portion 135B-2. The second extension portion 135B-1 and the second extension portion 135B-2 are inclined with respect to the tire circumferential direction so that an end on one side (left side in the drawing) in the tire circumferential direction is positioned on the outer side in the tire radial direction compared to an end on the other side (right side in the drawing).

The second extension portion 135B-1 extends from the center 1O1 to a side in the tire circumferential direction, and the second extension portion 135B-2 extends from the center 1O1 to another side in the tire circumferential direction. Then, the second extension portion 135B-1 is longer compared to the second extension portion 135B-2. Furthermore, a leading-edge portion of the second extension portion 135B-2 curves to the inner side in the tire radial direction. Hereafter, the second extension portion 135B-1 and the second extension portion 135B-2 may also be referred to collectively as "second extension portions 135B".

The third extension portion 135C-1 and the third extension portion 135C-2 extend from the center 1O1 in directions opposite from each other, and a continuous linear shape is formed by the third extension portion 135C-1 and the third extension portion 135C-2. The third extension portion 135C-1 and the third extension portion 135C-2 are inclined with respect to the tire circumferential direction so that an end on one side (left side in the drawing) in the tire circumferential direction is positioned on the inner side in the tire radial direction compared to an end on the other side (right side in the drawing).

The third extension portion 135C-1 extends from the center 1O1 to the other side in the tire circumferential direction, and the third extension portion 135C-2 extends from the center 1O1 to the side of the tire circumferential direction. Then, the third extension portion 135C-1 is shorter compared to the third extension portion 135C-2. Hereafter, the third extension portion 135C-1 and the third extension portion 135C-2 may also be referred to collectively as "third extension portions 135C".

The six extension portions 134E are angled at 60° respectively to adjacent extension portions 134E. The first asterisk protrusions 134, in other words, have a shape of the six extension portions 134E that extend radially from the center 1O1.

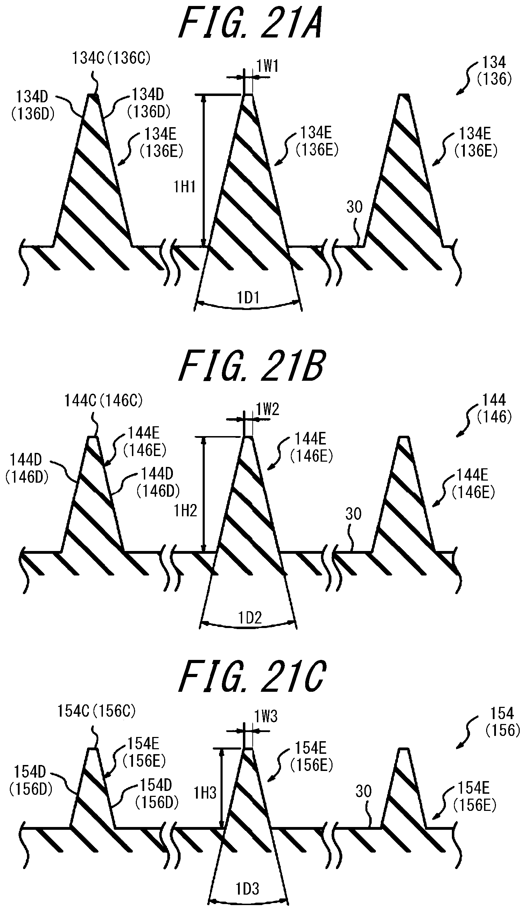

As illustrated in FIG. 21A, for the extension portions 134E of the first asterisk protrusions 134, a cross section in a direction orthogonal to the extension direction is isosceles triangle shaped with a flat top surface 134C. In other words, the first asterisk protrusions 134 have a top surface 134C and a pair of side surfaces 134D. In the present embodiment, the width of the top surface 134C (1W1 in the drawing) is 0.02 [mm], and the apex angle of the first asterisk protrusions 134 is 26 [degrees] (1D1 in the drawing). Additionally, the height (1H1 in the drawing) of the first asterisk protrusions 134 is a predetermined value of 0.1 [mm] or greater and 1.0 [mm] or less, and in the present embodiment is 0.35 [mm] for example. When the height of the protrusions is less than 0.1 [mm], forming the protrusions becomes difficult, and lowering the brightness sufficiently to attenuate the incident light to an extent that the protrusions appear black may not be possible (see below for details). Furthermore, by making the height of the protrusions 1.0 [mm] or less, the difference between the rigidity of a protrusion and the rigidity in the vicinity of the protrusion is reduced, so that local stress concentration is reduced.

The height of the protrusions and dimensions such as the spacing (pitch) between the protrusions, which are described later, in the present embodiment can be measured using, for example, a VR-3000 series one-shot 3D shape measuring machine by Keyence Corporation.

### [Second Asterisk Protrusions 136]

The second asterisk protrusions 136 have the same shape as the first asterisk protrusions 134, as illustrated in FIG. 15. Specifically, the second asterisk protrusions 136 have the shape of a first asterisk protrusion 134 that is rotated 90 [degrees] clockwise centered on the center 1O1, as viewed orthogonally to the base surface 30, after which the shape of the first asterisk protrusion 134 that is rotated 90 [degrees] centered on the center 1O1 is inverted top to bottom.

For the second asterisk protrusions 136, portions that correspond to the first extension portions 135A-1, 135A-2, the second extension portions 135B-1, 135B-2, the third extension portions 135C-1, 135C-2, and the center 1O1 of the first asterisk protrusions 134 are referred to as first extension portions 137A-1, 137A-2, second extension portions 137B-1, 137B-2, third extension portions 137C-1, 137C-2, and a center 102. Hereafter, the six aforementioned extension portions may also be referred to collectively as "extension portions 136E".

Accordingly, the height of the second asterisk protrusions 136 is a predetermined value of 0.1 [mm] or greater and 1.0 [mm] or less, and in the present embodiment is 0.35 [mm] for example. In other words, the height of the first asterisk protrusions 134 and the height of the second asterisk protrusions 136 have similar values of 0.35 [mm].

Additionally, for the second asterisk protrusions 136, the portion that corresponds to the top surface 134C of the first asterisk protrusions 134 is referred to as a top surface 136C. Furthermore, for the second asterisk protrusions 136, portions that correspond to the side surfaces 134D of the first asterisk protrusions 134 are referred to as side surfaces 136D (refer to FIG. 21A).

### [Others]

As illustrated in FIG. 15 and FIG. 16, the first asterisk protrusions 134 and the second asterisk protrusions 136 are alternately arranged in the tire circumferential direction and the tire radial direction, filling the entirety of the first low brightness region 116 (refer to FIG. 14).

Then, the respective tips of the first extension portions 135A-1, 135A-2 of the first asterisk protrusions 134 are respectively inserted between the second extension portion 137B-1 and the third extension portion 137C-2, which are adjacent in the tire radial direction, and between the second extension portion 137B-2 and the third extension portion 137C-1, which are adjacent in the tire radial direction, of the second asterisk protrusions 136. Additionally, the respective tips of the first extension portions 137A-1, 137A-2 of the second asterisk protrusions 136 are inserted between the second extension portion 135B-1 and the third extension portion 135C-2, which are adjacent in the tire circumferential direction, and between the second extension portion 135B-2 and the third extension portion 135C-1, which are adjacent in the tire circumferential direction, of the first asterisk protrusions 134.

Furthermore, the tip of the third extension portion 135C-1 of the first asterisk protrusions 134 is connected to the tip of the second extension portion 137B-1 of the second asterisk protrusions 136 that are arranged on the outer side in the tire radial direction relative to the first asterisk protrusions 134. Accordingly, a connecting portion 134A is formed. Additionally, the tip of the second extension portion 135B-1 of the first asterisk protrusions 134 is connected to the tip of the third extension portion 137C-1 of the second asterisk protrusions 136 that are arranged on a side in the tire circumferential direction relative to the first asterisk protrusions 134. Accordingly, a connecting portion 134B is formed.

In this configuration, the first asterisk protrusions 134 and the second asterisk protrusions 136 are connected in a staircase-shape from the inner side to the outer side in the tire radial direction via the connecting portion 134A and the connecting portion 134B.

Additionally, for a first asterisk protrusion 134 and a second asterisk protrusion 136 that are adjacent to each other in the tire radial direction and the tire circumferential direction, the spacing (hereafter, "spacing 1P1") between the center 1O1 and the center 102 is a predetermined value of 0.1 [mm] or greater and 1.0 [mm] or less. When the spacing 1P1 is less than 0.1 [mm], forming the protrusions becomes difficult. Furthermore, when the spacing 1P1 is greater than 1.0 [mm], lowering the brightness sufficiently to attenuate the incident light to an extent that the protrusions appear black may not be possible (see below for details).

Here, the first low brightness region 116 that appears black and is described in the present embodiment is a region has a brightness value L* of less than 10 for example, as measured with a handy spectrophotometer (NF333) from Nippon Denshoku Industries Co., Ltd. In the present embodiment, the brightness value L* in the first low brightness region 116 was measured as 4 using this measurement device.

### (Second Low Brightness Regions 118)

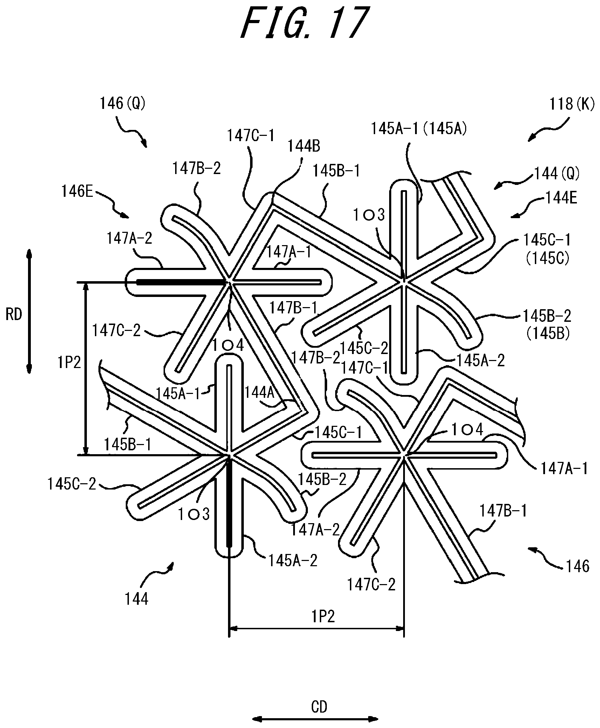

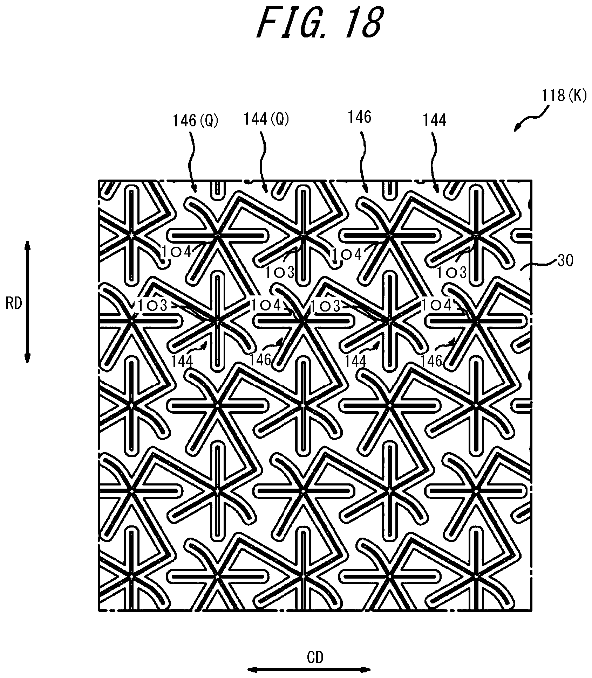

The second low brightness regions 118 have multiple asterisk-shaped protrusions (asterisk protrusions) Q that protrude from the base surface 30, as illustrated in FIG. 17 and FIG. 18. Specifically, the second low brightness regions 118 have multiple first asterisk protrusions 144 (Q) and multiple second asterisk protrusions 146 (Q). Then, the first asterisk protrusions 144 and the second asterisk protrusions 146 are alternately arranged in the tire circumferential direction and the tire radial direction. The first asterisk protrusions 144 and the second asterisk protrusions 146 are an example of second protrusions (protrusions) Q.

### [First Asterisk Protrusions 144]

The first asterisk protrusions 144 is described mainly with regard to portions that differ from the first asterisk protrusions 134 in the first low brightness region 116 (refer to FIG. 15).

As illustrated in FIG. 17, the first asterisk protrusions 144 are similar in shape to the first asterisk protrusions 134 (refer to FIG. 15) in the first low brightness region 116 as viewed orthogonally to the base surface 30. For the first asterisk protrusions 144, portions that correspond to the first extension portions 135A-1, 135A-2, the second extension portions 135B-1, 135B-2, the third extension portions 135C-1, 135C-2, and the center 1O1 of the first asterisk protrusions 134 are referred to as first extension portions 145A-1, 145A-2, second extension portions 145B-1, 145B-2, third extension portions 145C-1, 145C-2, and a center 103. Hereafter, the six aforementioned extension portions may also be referred to collectively as "extension portions 144E".

As illustrated in FIG. 21B, for the extension portions 144E of the first asterisk protrusions 144, a cross section in a direction orthogonal to the extension direction is isosceles triangle shaped with a flat top surface 144C. In other words, the first asterisk protrusions 144 have a top surface 144C and a pair of side surfaces 144D. In the present embodiment, the width of the top surface 144C (1W2 in the drawing) is 0.02 [mm], and the apex angle of the first asterisk protrusions 144 is 26 [degrees] (1D2 in the drawing). Furthermore, the height (1H2 in the drawing) of the first asterisk protrusions 144 is a predetermined value of 0.1 [mm] or greater and 1.0 [mm] or less. In the present embodiment, the height is, for example, 0.28 [mm]. In other words, the height (protrusion height) of the first asterisk protrusions 144 is lower than the height of the first asterisk protrusions 134 in the first low brightness region 116.

### [Second Asterisk Protrusions 146]

As illustrated in FIG. 17, the second asterisk protrusions 146 have the same shape as the first asterisk protrusions 144. Specifically, the second asterisk protrusions 146 have the shape of a first asterisk protrusion 144 that is rotated 90 [degrees] clockwise centered on the center 103, as viewed orthogonally to the base surface 30, after which the shape of the first asterisk protrusion 144 that is rotated 90 [degrees] centered on the center 103 is inverted top to bottom.

For the second asterisk protrusions 146, portions that correspond to the first extension portions 145A-1, 145A-2, the second extension portions 145B-1, 145B-2, the third extension portions 145C-1, 145C-2, and the center 103 of the first asterisk protrusions 144 are referred to as first extension portions 147A-1, 147A-2, second extension portions 147B-1, 147B-2, third extension portions 147C-1, 147C-2, and a center 104. Hereafter, the six aforementioned extension portions may also be referred to collectively as "extension portions 146E".

Additionally, for the second asterisk protrusions 146, the portion that corresponds to the top surface 144C of the first asterisk protrusions 144 is referred to as a top surface 146C. Furthermore, for the second asterisk protrusions 146, portions that correspond to the side surfaces 144D of the first asterisk protrusions 144 are referred to as side surfaces 146D (refer to FIG. 21B).

Then, the height of the second asterisk protrusions 146 is a predetermined value of 0.1 [mm] or greater and 1.0 [mm] or less, and in the present embodiment is 0.28 [mm] for example. In other words, the height of the first asterisk protrusions 144 and the height of the second asterisk protrusions 146 have similar values of 0.28 [mm].

### [Others]

As illustrated in FIG. 18, the first asterisk protrusions 144 and the second asterisk protrusions 146 are alternately arranged in the tire circumferential direction and the tire radial direction, filling the entirety of the second low brightness regions 118 (refer to FIG. 14). Then, the first asterisk protrusions 144 and the second asterisk protrusions 146 are connected in a similar way to the way that the first asterisk protrusions 134 and the second asterisk protrusions 136 in the first low brightness region 116.

Additionally, as illustrated in FIG. 17, for first asterisk protrusions 144 and second asterisk protrusions 146 that are adjacent to each other in the tire radial direction and the tire circumferential direction, the spacing (hereafter, "spacing 1P2") between the center 103 and the center 104 is a predetermined value of greater than 1.0 [mm] and 3.0 [mm] or less. In the present embodiment, the spacing 1P2 between centers 103 and 104 has a similar value to the spacing 1P1 between centers 1O1 and 102 in the first low brightness region 116.

In the present embodiment, the brightness value L* in the first low brightness region 116 was measured as 6 using the aforementioned measurement device.

### (Third Low Brightness Regions 120)

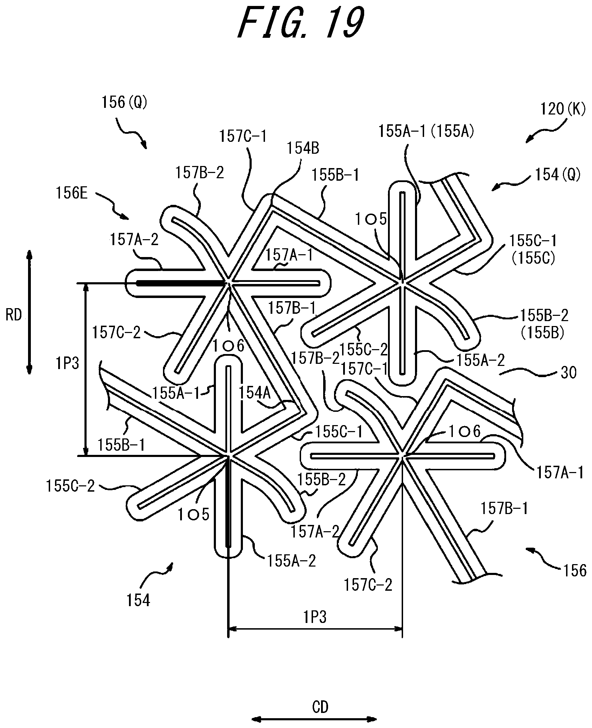

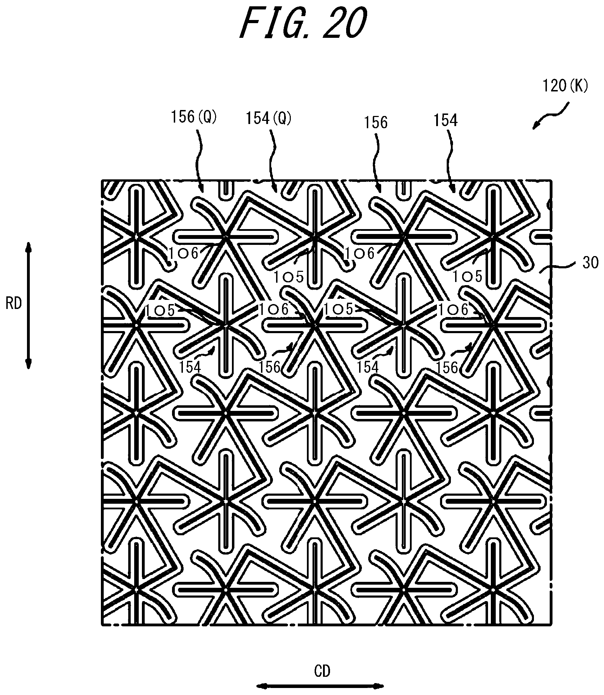

The third low brightness region 120 has multiple asterisk-shaped protrusions (asterisk protrusions) Q that protrude from the base surface 30, as illustrated in FIG. 19 and FIG. 20. Specifically, the third low brightness region 120 has multiple first asterisk protrusions 154 (Q) and multiple second asterisk protrusions 156 (Q). Then, the first asterisk protrusions 154 and the second asterisk protrusions 156 are alternately arranged in the tire circumferential direction and the tire radial direction. The first asterisk protrusions 154 and the second asterisk protrusions 156 are an example of third protrusions (protrusions) Q.

### [First Asterisk Protrusions 154]

The first asterisk protrusions 154 is described mainly with regard to portions that differ from the first asterisk protrusions 134 in the first low brightness region 116 (refer to FIG. 15).

As illustrated in FIG. 19, the first asterisk protrusions 154 are similar in shape to the first asterisk protrusions 134 (refer to FIG. 15) in the first low brightness region 116 as viewed orthogonally to the base surface 30. For the first asterisk protrusions 154, portions that correspond to the first extension portions 135A-1, 135A-2, the second extension portions 135B-1, 135B-2, the third extension portions 135C-1, 135C-2, and the center 1O1 of the first asterisk protrusions 134 are referred to as first extension portions 155A-1, 155A-2, second extension portions 155B-1, 155B-2, third extension portions 155C-1, 155C-2, and a center 105. Hereafter, the six aforementioned extension portions may also be referred to collectively as "extension portions 154E".

As illustrated in FIG. 21C, for the extension portions 154E of the first asterisk protrusions 154, a cross section in a direction orthogonal to the extension direction is isosceles triangle shaped with a flat top surface 154C. In other words, the first asterisk protrusions 154 have a top surface 154C and a pair of side surfaces 154D. In the present embodiment, the width of the top surface 154C (1W3 in the drawing) is 0.02 [mm], and the apex angle of the first asterisk protrusions 154 is 26 [degrees] (1D3 in the drawing). Furthermore, the height (1H3 in the drawing) of the first asterisk protrusions 154 is a predetermined value of 0.1 [mm] or greater and 1.0 [mm] or less. In the present embodiment, the height is, for example, 0.2 [mm]. In other words, the height of the first asterisk protrusions 154 is lower than the height of the first asterisk protrusions 144 in the second low brightness regions 118.

### [Second Asterisk Protrusions 156]

As illustrated in FIG. 19, the second asterisk protrusions 156 have the same shape as the first asterisk protrusions 154. Specifically, the second asterisk protrusions 156 have the shape of a first asterisk protrusion 154 that is rotated 90 [degrees] clockwise centered on the center 105, as viewed orthogonally to the base surface 30, after which the shape of the first asterisk protrusion 154 that is rotated 90 [degrees] centered on the center 105 is inverted top to bottom.

For the second asterisk protrusions 156, portions that correspond to the first extension portions 155A-1, 155A-2, the second extension portions 155B-1, 155B-2, the third extension portions 155C-1, 155C-2, and the center 105 of the first asterisk protrusions 154 are referred to as first extension portions 157A-1, 157A-2, second extension portions 157B-1, 157B-2, third extension portions 157C-1, 157C-2, and a center 106. Hereafter, the six aforementioned extension portions may also be referred to collectively as "extension portions 156E".

Additionally, for the second asterisk protrusions 156, the portion that corresponds to the top surface 154C of the first asterisk protrusions 154 is referred to as a top surface 156C. Furthermore, for the second asterisk protrusions 156, portions that correspond to the side surfaces 154D of the first asterisk protrusions 154 are referred to as side surfaces 156D (refer to FIG. 21C).

Then, the height of the second asterisk protrusions 156 is a predetermined value of 0.1 [mm] or greater and 1.0 [mm] or less, and in the present embodiment is 0.2 [mm] for example. In other words, the height of the first asterisk protrusions 154 and the height of the second asterisk protrusions 156 are similar values of 0.2 [mm].

### [Others]

As illustrated in FIG. 20, the first asterisk protrusions 154 and the second asterisk protrusions 156 are alternately arranged in the tire circumferential direction and the tire radial direction, filling the entirety of the third low brightness region 120 (refer to FIG. 14). Then, the first asterisk protrusions 154 and the second asterisk protrusions 156 are connected in a similar way to the way that the first asterisk protrusions 134 and the second asterisk protrusions 136 in the first low brightness region 116.

Additionally, as illustrated in FIG. 19, for a first asterisk protrusion 154 and a second asterisk protrusion 156 that are adjacent to each other in the tire radial direction and the tire circumferential direction, the spacing (hereafter, "spacing 1P3") between the center 105 and the center 106 is a predetermined value of greater than 1.0 [mm] and 3.0 [mm] or less. In the present embodiment, the spacing 1P3 between centers 105 and 106 has a similar value to the spacing 1P1 between the center 1O1 and the center1O2 in the first low brightness region 116. In other words, the spacing 1P1 between the first asterisk protrusions 134 and the second asterisk protrusions 136 in the first low brightness region 116, the spacing 1P2 between the first asterisk protrusions 144 and the second asterisk protrusions 146 in the second low brightness regions 118, and the spacing 1P3 between the first asterisk protrusions 154 and the second asterisk protrusions 156 in the third low brightness regions 120 have similar values.

In the present embodiment, the brightness value L* in the third low brightness region 120 was measured as 9 using the aforementioned measurement device. Additionally, the brightness value L* of the other regions 122, in which no protrusions are formed, was measured as 24 using the aforementioned measurement device.

### (Action and Effect)

Next, the actions and effects of the decorative portion 14 and the patterned region K of the tire 1 according to the fourth embodiment are described.

In the first low brightness region 116 of the decorative portion 14 of the tire side portion 1d, light that is incident on the first asterisk protrusions 134 and the second asterisk protrusions 136 that are formed in the first low-brightness region 116 hits the side surfaces 134D and the side surfaces 136D as illustrated in FIG. 21A. Then, the light that was incident attenuates while repeatedly reflecting between the side surfaces 134D and the side surfaces 136D that face each other and is reflected to the outer side.

Additionally, in the second low brightness regions 118 that are respectively arranged on both ends of the first low brightness region 116 in the tire circumferential direction, light that is incident on the first asterisk protrusions 144 and the second asterisk protrusions 146 that are formed in the second low brightness regions 118 hits the side surfaces 144D and the side surfaces 146D. Then, the light that was incident attenuates while repeatedly reflecting between the side surfaces 144D and the side surfaces 146D that face each other and is reflected to the outer side.

Furthermore, in the second low brightness regions 120 arranged on both ends of the second low brightness regions 118 in the tire circumferential direction, light that is incident on the first asterisk protrusions 154 and the second asterisk protrusions 156 that are formed in the third low brightness regions 120 hits the side surfaces 154D and the side surfaces 156D. Then, the light that was incident attenuates while repeatedly reflecting between the side surfaces 154D and the side surface 156D that face each other and is reflected to the outer side.

Furthermore, in the other regions 122, in which no protrusions are formed, of the tire side portion 1d, light that is incident on the other regions 122 is reflected to the outer side by an outer surface that forms the other regions 122.

Here, the spacing 1P1 between the first asterisk protrusions 134 and the second asterisk protrusions 136 in the first low brightness region 116, the spacing 1P2 between the first asterisk protrusions 144 and the second asterisk protrusions 146 in the second low brightness regions 118, and the spacing 1P3 between the first asterisk protrusions 154 and the second asterisk protrusions 156 in the third low brightness regions 120 have similar values. In other words, the density of protrusions formed in the first low brightness region 116, the density of protrusions formed in the second low brightness regions 118, and the density of protrusions formed in the third low brightness regions 120 have similar values.

Furthermore, the height of the first asterisk protrusions 134 and the height of the second asterisk protrusions 136 of the first low brightness region 116 have similar values of 0.135 [mm]. Additionally, the height of the first asterisk protrusions 144 and the height of the second asterisk protrusions 146 of the second low brightness regions 118 have similar values of 0.28 [mm]. Further, the height of the first asterisk protrusions 154 and the height of the second asterisk protrusions 156 of the third low brightness regions 120 have similar values of 0.2 [mm]. In other words, the protrusions in the first low brightness region 116, the protrusions in the second low brightness regions 118, and the protrusions in the third low brightness regions 120, in this order, decrease in height.

Additionally, the apex angles of the respective protrusions are similar, and thus the proportion of the base surface 30 of the first low brightness region 116 per unit area, the proportion of the base surface 30 of the second low brightness regions 118 per unit area, and the proportion of the base surface 30 of the third low brightness regions 120 per unit area, in this order, increase in size.

Accordingly, the amount of light reflected to the outer side at the first low brightness region 116 is less compared to the amount of light reflected to the outer side at the second low brightness regions 118. Furthermore, the amount of light reflected to the outer side at the second low brightness regions 118 is less compared to the amount of light reflected to the outer side at the third low brightness regions 120.

Therefore, the third low brightness regions 120, the second low brightness regions 118, and the first low brightness region 116, in this order, decrease in brightness L*. In other words, the first low brightness region 116 appears relatively black compared to the second low brightness regions 118, and the second low brightness regions 118 appear relatively black compared to the third low brightness regions 120.

Thus, by changing the height of the protrusions, the range for expressing a decorative portion 14 having regions, on which protrusions are formed, can be increased (the number of modalities can be increased) compared to a case in which the brightness L* is similar across the entirety of the decorative portion 14 in which protrusions are formed.

Additionally, lowering the brightness of the third low brightness regions 120, the second low brightness regions 118, and the first low brightness region 116, which are aligned in a tire circumferential direction (as an example of a direction), in this order allows a gradual change in brightness (a gradation effect) to be expressed.

Additionally, the respective extension portions 134E of the first asterisk protrusions 134 extend in different directions, and the respective extension portions 136E of the second asterisk protrusions 136 extend in different directions. Accordingly, differences in appearance of the first low brightness region 116 can be reduced even when the concentration of reflected light is reduced and viewing the medium brightness region 116 at different viewing angles. Furthermore, the first asterisk protrusions 134 and the second asterisk protrusions 136 respectively become less likely to collapse, which can improve the durability of the first asterisk protrusions 134 and the second asterisk protrusions 136. The same action is achieved in the second low brightness region 118 and the third low brightness region 120.

Furthermore, the first asterisk protrusions 134, 144, 154 and the second asterisk protrusions 136, 146, 156 are connected to each other via the connecting portions 134A, 144A, 154A, and the connecting portions 134B, 144B, 154B. Accordingly, the first asterisk protrusions 134, 144, 154 and the second asterisk protrusions 136, 146, 156 can support each other via respective connecting portions, preventing the first asterisk protrusions 134, 144, 154 and the second asterisk protrusions 136, 146, 156 from collapsing and thereby improving durability.

A tire 1 according to the fifth embodiment of the present invention is described below, with reference to FIG. 22 to FIG. 26.

For the tire 1 of the fifth embodiment, the one or more patterned regions K disposed on the decorative portion 14 include a first patterned region K. In the first patterned region K, multiple first protrusions Q protrude from the base surface 30 of the decorative portion 14 with a protrusion height of 0.1 mm or greater and 1.0 mm or less and are formed at a spacing of greater than 0.1 mm and 1.0 mm or less. In at least the first patterned region K, the multiple first protrusions Q are inclined in a direction with respect to a normal line that is perpendicular to the base surface 30.

As illustrated in FIG. 22A, a ring-shaped decorative portion 14 that spans the tire maximum width position Wmax in the tire radial direction and is continuous in the tire circumferential direction is formed on the tire side portion 1d of the tire 1 when viewed from the axial direction of the tire 1.

Furthermore, the base surface 30 is formed on the decorative portion 14 on the tire side portion 1d. The base surface 30 is smooth with constant dimensions and recessed with respect to other regions 220. The other regions 220 are regions other than the decorative portion 14 on the tire side portion 1d and are regions in which no protrusions that are described later or the like, are formed. In the present embodiment, the base surface 30 is recessed by 0.45 (mm) with respect to the other regions 220 of the tire side portion 1d. The base surface 30 of the present embodiment has the same surface roughness as the other regions 220.

### (First Low Brightness Regions 218A and Second Low Brightness Regions 218B)

Furthermore, on the decorative portion 14, first low brightness regions 218A that appear black and second low brightness regions 218B that have a lower brightness compared to the other regions 220 are alternately formed in the tire circumferential direction and the tire radial direction. The first low brightness regions 218A and the second low brightness regions 218B are an example of the patterned region. The first low brightness regions 218A and the second low brightness regions 218B of the present embodiment are rectangular in planar view.

The first low brightness region 218A and the second low brightness region 218B are formed by disposing irregularities in portions in the tire-forming mold for forming the tire 1. These portions in the tire-forming mold correspond to the first low brightness regions 218A and the second low brightness regions 218B.

A representative first low brightness region 218A is described below as representative.

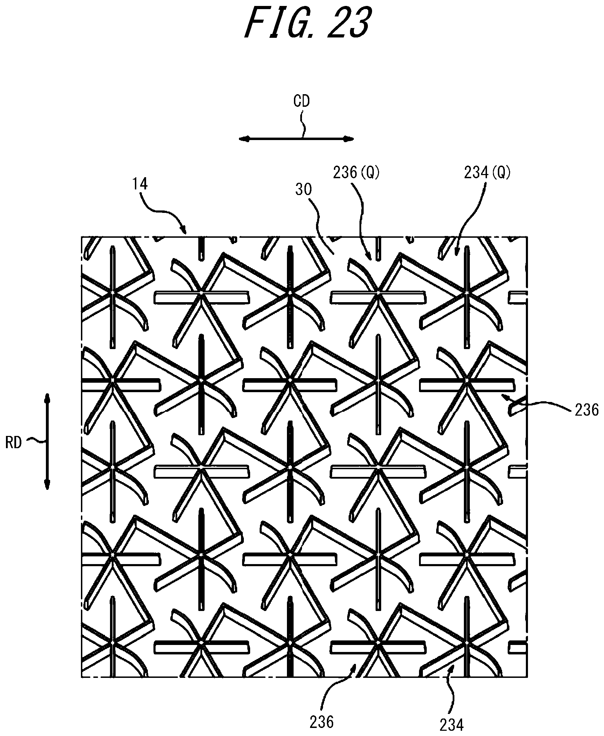

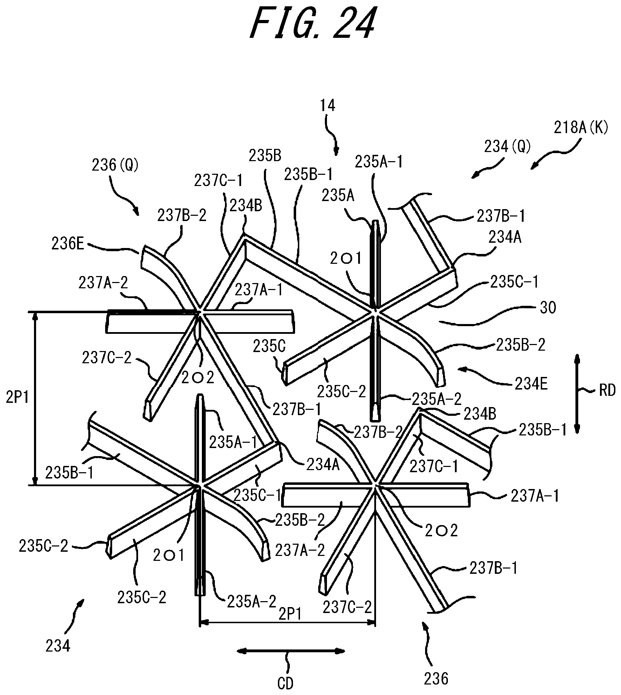

As illustrated in FIG. 23 and FIG. 24, the first low brightness region 218A has multiple first asterisk protrusions 234 and multiple second asterisk protrusions 236 protruding from the base surface 30. Then, the first asterisk protrusions 234 and the second asterisk protrusions 236 are alternately arranged in the tire circumferential direction and the tire radial direction. The first asterisk protrusions 234 and the second asterisk protrusions 236 are an example of protrusions.

### [First Asterisk Protrusions 234]

As illustrated in FIG. 24, the first asterisk protrusions 234 are formed of first extension portions 235A-1, 235A-2, second extension portions 235B-1, 235B-2, and third extension portions 235C-1, 235C-2 that extend in respectively different directions from a center 201 as a base point as viewed orthogonally to the base surface 30 (in a rotation axis direction of the tire 1). Hereafter, these six extension portions may also be referred to collectively as "extension portions 234E". Then, an extension portion 234E and another extension portion 234E (apart from those extending from the center 201 in directions opposite from each other) form a line shape bent at the center 201.

The first extension portion 235A-1 and the first extension portion 235A-2 extend from the center 201 in directions opposite from each other, and a continuous linear shape is formed by the first extension portion 235A-1 and the first extension portion 235A-2. The first extension portion 235A-1 extends from the center 201 to the outer side in the tire radial direction, and the first extension portion 235A-2 extends from the center 201 to the inner side in the tire radial direction. Then, the first extension portion 235A-1 and the first extension portion 235A-2 are of similar length. Hereafter, the first extension portion 235A-1 and the first extension portion 235A-2 may also be referred to collectively as "first extension portions 235A".

The second extension portion 235B-1 and the second extension portion 235B-2 extend from the center 201 in directions opposite from each other, and a continuous linear shape is formed by the second extension portion 235B-1 and the second extension portion 235B-2. The second extension portion 235B-1 and the second extension portion 235B-2 are inclined with respect to the tire circumferential direction so that the end on one side (left side in the drawing) of the tire circumferential direction is positioned on the outer side in the tire radial direction as compared to the end on the other side (right side in the drawing).

The second extension portion 235B-1 extends from the center 201 to a side in the tire circumferential direction, and the second extension portion 235B-2 extends from the center 201 to another side in the tire circumferential direction. Then, the second extension portion 235B-1 is longer compared to the second extension portion 235B-2. Furthermore, a leading-edge portion of the second extension portion 235B-2 curves to the inner side in the tire radial direction. Hereafter, the second extension portion 235B-1 and the second extension portion 235B-2 may also be referred to collectively as "second extension portions 235B".

The third extension portion 235C-1 and the third extension portion 235C-2 extend from the center 201 in directions opposite from each other, and a continuous linear shape is formed by the third extension portion 235C-1 and the third extension portion 235C-2. The third extension portion 235C-1 and the third extension portion 235C-2 are inclined with respect to the tire circumferential direction so that an end on one side (left side in the drawing) in the tire circumferential direction is positioned on the inner side in the tire radial direction compared to an end on the other side (right side in the drawing).

The third extension portion 235C-1 extends from the center 201 to the other side in the tire circumferential direction, and the third extension portion 235C-2 extends from the center 201 to the side of the tire circumferential direction. Then, the third extension portion 235C-1 is shorter compared to the third extension portion 235C-2. Hereafter, the third extension portion 235C-1 and the third extension portion 235C-2 may also be referred to collectively as "third extension portions 235C".

The six extension portions 234E are angled at 60° respectively to adjacent extension portions 234E. The first asterisk protrusions 234, in other words, have a shape of the six extension portions 234E that extend radially from the center 201.

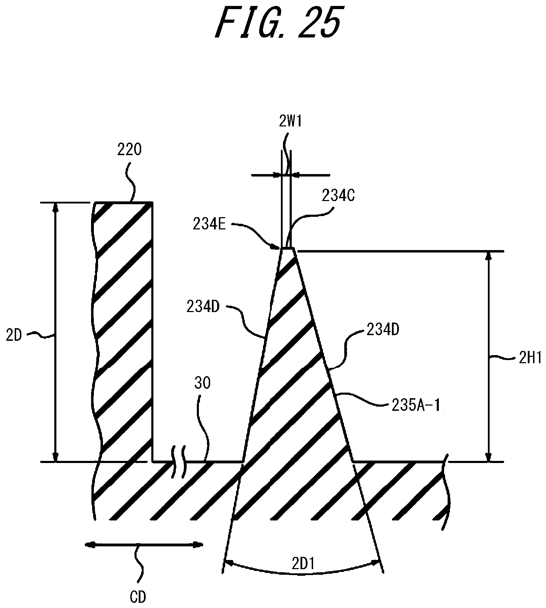

A representative cross section, along the tire circumferential direction, of the first extension portion 235A-1, which extends in one direction along a tire radial direction, within the extension portions 234E of a first asterisk protrusion 234, is illustrated in FIG. 25. As illustrated in FIG. 25, for the extension portion 235A-1, a cross section in a direction orthogonal to the extension direction is triangle shaped with a flat top surface 234C. In other words, the first asterisk protrusions 234 have a top surface 234C and a pair of side surfaces 234D. In the present embodiment, the top surface 234C (2W1 in the drawing) of the extension portion 234E has a width of 0.02 [mm], and the extension portion 234E has an apex angle of 26 [degrees] (2D1 in the drawing).

Additionally, the height (2H1 in the drawing) of the first asterisk protrusions 234, which is measured from the base surface 30, is a predetermined value of 0.1 [mm] or greater and 1.0 [mm] or less. When a height of the protrusions (protrusion height) is less than 0.1 [mm], forming the protrusions becomes difficult, and it may not be possible to lower the brightness sufficiently to attenuate the incident light to an extent that the protrusions appear black (see below for details). Furthermore, by making the height of the protrusions 1.0 [mm] or less, the difference between the rigidity of a protrusion and the rigidity in the vicinity of the protrusion is reduced, so that local stress concentration is reduced.

The height of the protrusions and dimensions such as the spacing (pitch) between the protrusions, which are described later, in the present embodiment can be measured using, for example, a VR-3000 series one-shot 3D shape measuring machine by Keyence Corporation.

### [Second Asterisk Protrusions 236]

As illustrated in FIG. 24, the second asterisk protrusions 236 have the same shape as the first asterisk protrusions 234. Specifically, the second asterisk protrusions 236 have the shape of a first asterisk protrusion 234 that is rotated 90 [degrees] clockwise centered on the center 201, as viewed orthogonally to the base surface 30, after which the shape of the first asterisk protrusion 234 that is rotated 90 [degrees] centered on the center 201 is inverted top to bottom.

For the second asterisk protrusions 236, the portions of the first asterisk protrusions 234 that correspond to the first extension portions 235A-1, 235A-2, the second extension portions 235B-1, 235B-2, the third extension portions 235C -1, 235C-2, and the portion that corresponds to the center 201 are referred to as the first extension portions 237A-1, 237A-2, second extension portions 237B-1, 237B-2, third extension portions 237C-1, 237C-2, and a center 2O2. Hereafter, the six aforementioned extension portions may also be referred to collectively as "extension portions 236E".

The height 2H1 and apex angle 2D1 of the second asterisk protrusions 236 have the same prescription as the first asterisk protrusions 234.

Here, on the decorative portion 14 of the present embodiment, the extension portions 234E of the first asterisk protrusions 234 and the extension portions 236E of the second asterisk protrusions 236 are all inclined to the tire radial direction outer side.

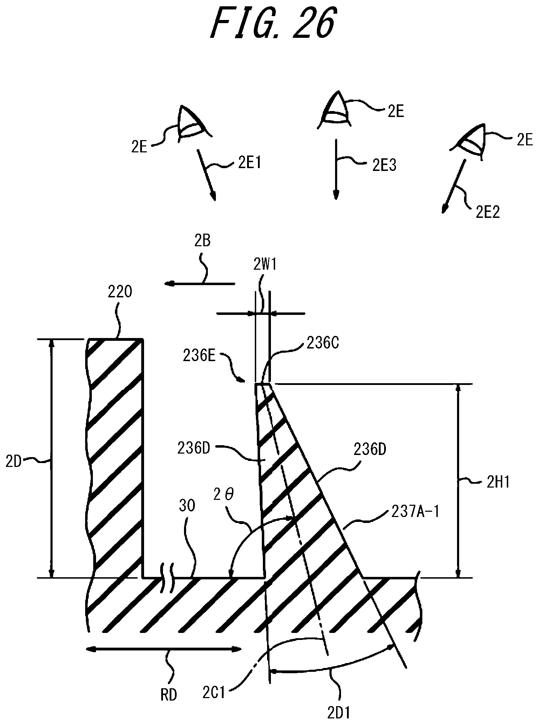

A representative cross section, along the tire radial direction, of the first extension portion 237A-1, which extends along the tire circumferential direction, within the extension portions 236E of a first asterisk protrusion 236, is illustrated in FIG. 26. As illustrated in FIG. 26, the first extension portion 237A-1 is inclined to the tire radial direction outer side (the direction of arrow 2B) (the centerline 2C1 of the first extension portion 237A-1 in the width direction (thickness direction) has an inclination angle of θ° relative to the base surface 30).

Additionally, the extension portions 236E that extend along the tire circumferential direction like the first extension portion 237A-1 is inclined toward the side surfaces 236D of the tire radial direction outer side of extension portion 236E as illustrated in FIG. 26. The extension portions 234E that extend along the tire radial direction like the first extension portion 235A-1 is not inclined toward any side surface 234D as illustrated in FIG. 25.

Although omitted from the drawings, extension portions 234E that extend in a direction inclined to the tire circumferential direction are inclined toward the side surfaces 234D of the tire radial direction outer side, and similarly, extension portions 236E that extend in a direction inclined to the tire circumferential direction are inclined relative to the side surfaces 236D of the tire radial direction outer side.

The entirety of the first asterisk protrusions 234 is inclined to the tire radial direction outer side. Thus, in regard to the inclination angle θ of the extension portions 234E, the inclination angle θ of the extension portions 234E that extend along the tire circumferential direction, is at a maximum (e.g., 30°). As the direction that the extension portions 234E extend in approaches the tire circumferential direction, the inclination angle gradually becomes smaller. The inclination angle becomes zero when the direction that the extension portions 234E extend in is the tire circumferential direction (refer to FIG. 25).

### [Others]

As illustrated in FIG. 23 and FIG. 24, the first asterisk protrusions 234 and the second asterisk protrusions 236 are alternately arranged in the tire circumferential direction and the tire radial direction, filling the entirety of the first low brightness region 218A.

Then, the respective tips of the first extension portions 235A-1, 235A-2 of the first asterisk protrusions 234 are respectively inserted between the second extension portion 237B-1 and the third extension portion 237C-2, which are adjacent in the tire radial direction, and between the second extension portion 237B-2 and the third extension portion 237C-1, which are adjacent in the tire radial direction, of the second asterisk protrusions 236. Additionally, the respective tips of the first extension portions 237A-1, 237A-2 of the second asterisk protrusions 236 are inserted between the second extension portion 235B-1 and the third extension portion 235C-2, which are adjacent in the tire circumferential direction, and between the second extension portion 235B-2 and the third extension portion 235C-1, which are adjacent in the tire circumferential direction, of the first asterisk protrusions 234.

Furthermore, the tip of the third extension portion 235C-1 of the first asterisk protrusions 234 is connected to the tip of the second extension portion 237B-1 of the second asterisk protrusions 236 that are arranged on the outer side in the tire radial direction relative to the first asterisk protrusions 234. Accordingly, a connecting portion 234A is formed. Furthermore, the tip of the second extension portion 235B-1 of the first asterisk protrusions 234 is connected to the tip of the third extension portion 237C-1 of the second asterisk protrusions 236 that are arranged on a side in the tire circumferential direction relative to the first asterisk protrusions 234. Accordingly, a connecting portion 234B is formed.

In this configuration, the first asterisk protrusions 234 and the second asterisk protrusions 236 are connected in a staircase-shape from the inner side to the outer side in the tire radial direction via the connecting portion 234A and the connecting portion 234B.

Additionally, for a first asterisk protrusion 234 and a second asterisk protrusion 236 that are adjacent to each other in the tire radial direction and the tire circumferential direction, the spacing (hereafter, "spacing 2P1") between the center 201 and the center 202 is a predetermined value of 0.1 [mm] or greater and 1.0 [mm] or less. When the spacing 2P1 is less than 0.1 [mm], forming the protrusions is difficult. Furthermore, when the spacing 2P1 is greater than 1.0 [mm], it may not be possible to lower the brightness sufficiently to attenuate the incident light to an extent that the protrusions appear black compared to the other regions 220 that are region other than the decorative portion 14 on the tire side portion 1d (see below for details).

As illustrated in FIG. 25 and FIG. 26, the height 2H1 of the first asterisk protrusions 234 and the height 2H1 of the second asterisk protrusions 236 are preferably smaller than the depth dimension 2D (the dimension from the surface of the other regions 220 of the tire side portion 1d to the base surface 30) of each decorative portion 14. In other words, the first asterisk protrusions 234 and the second asterisk protrusions 236 preferably do not protrude further than the surface of the other regions 220 of the tire side portion 1d.

Here, the first low brightness regions 218A that appear black and are described in the present embodiment are regions that have a brightness value L of less than 10 for example, as measured with a handy spectrophotometer from Nippon Denshoku Industries Co., Ltd, and although the first low brightness regions 218A may appear blacker than the other regions 220 that are regions other than the decorative portion 14, the brightness value L may not necessarily be less than 10.

On the other hand, although the other regions 220 (regions in which no first asterisk protrusions 234 and no second asterisk protrusions 236 are formed), other than the decorative portion 14, on the tire side portion 1d are regions that have a brightness value L of greater than 220 for example, as measured with a handy spectrophotometer from Nippon Denshoku Industries Co., Ltd., the brightness L may be 220 or less. In other words, the first low brightness region 218, which appears black, is a region of relatively low brightness compared to a surrounding in the outer surface of the tire 1.

The second low brightness region 218B is a region in which the first asterisk protrusions 234 and the second asterisk protrusions 236 in the first low brightness region 218A are inclined to the tire radial direction inner side. In other words, the second low brightness region 218B is a 180° rotation of the first low brightness region 218A in planar view, and thus an illustration and detailed explanation thereof are omitted.

### (Action and Effect)

Next, the actions and effects of the decorative portion 14 and the patterned region K of the tire 1 according to the fifth embodiment are described.

In the other regions 220, in which no first asterisk protrusions 234 and no second asterisk protrusions 236 are formed, of the tire side portion 1d, the light that was reflected is reflected to the outer side by an outer surface that forms the other regions 220.

On the other hand, in the first low brightness region 218A and the first low brightness region 218B disposed on the decorative portion 14 of the tire side portion 1d, light that is incident on the first asterisk protrusions 234 and the second asterisk protrusions 236 hits the side surfaces 234D and the side surfaces 236D. Then, the light that was incident attenuates while repeatedly reflecting between the side surfaces 234D and the side surfaces 236D that face each other and is reflected to the outer side.

Therefore, the amount of light that is reflected to the outer side in the first low brightness regions 218A and the second low brightness regions 218B is less compared to the other regions 220 than the amount of light that is reflected to the outer side in the other regions 220 in which no first asterisk protrusions 234 and no second asterisk protrusions 236 are formed, and thus, the low brightness regions 218 appear relatively black.

Furthermore, when comparing viewing the first low brightness region 218A from an inclination direction of extension portions 236, in other words from an extension line direction of a central line 2C1 of the extension portions 236E (line of sight 2E1. Reference sign 2E is an eye.), viewing from a direction opposite to the inclination direction of the extension portions 236 (line of sight 2E2. Reference sign 2E is an eye.), and viewing the first low brightness region 218A in planar view (line of sight 2E3. Reference sign 2E is an eye.) as illustrated in FIG. 26, the amount of light reflected in a direction inclined to the direction opposite the inclination direction of the extension portions 236E and the amount of light reflected in a direction that is perpendicular to the first low brightness region 218A are greater in comparison to the amount of light reflected in the inclination direction of the extension portions 236. This is because, for the extension portions 236E illustrated in FIG. 26, the angle of the side surfaces 236D on the right side of the drawing relative to the line of site 2E2 the line of site 2E3 is obtuse. Thus, more light is reflected in the direction of the eye 2E by the side surfaces 236D on the left side of the drawing.

On the decorative portion 14 of this embodiment, the first asterisk protrusions 234 and the second asterisk protrusions 236 of the first low brightness regions 218A are inclined to the tire radial direction outer side, and the first asterisk protrusions 234 and the second asterisk protrusions 236 of the second low brightness regions 218B are arranged on the tire radial direction inner side. Thus, when looking down, from diagonally above, at the tire maximum width position Wmax of the decorative portion 14 that spans the tire maximum width position Wmax that is arranged above the rotation axis of the tire 1 as illustrated in FIG. 22B for example, the direction of the line of site 2E1 approaches or coincides with the inclined directions of the first asterisk protrusions 234 and the second asterisk protrusions 236 of the first low brightness regions 218A. The first low brightness regions 218A appear darker than the other regions 220 and the second low brightness regions 218B and can achieve a greater contrast between the first low brightness regions 218A and the other regions 220.

In other words, by moving a line of site diagonally downwards in a standing position when looking down at a tire 1 installed on a vehicle, for example, as illustrated in FIG. 22A, the first low brightness region 218A of the tire side portion 1d can be made to appear most black and achieve a lot of contrast for the decorative portion 14 in the portion above the tire rotation axis.

The first asterisk protrusions 234 and the second asterisk protrusions 236 are connected to each other in a staircase-shape via the connecting portions 234A and the connecting portions 234B. Accordingly, the first asterisk protrusions 234 and the second asterisk protrusions 236 can support each other via the connecting portions 234A, 234B, preventing the first asterisk protrusions 234 and the second asterisk protrusions 236 from collapsing, and thereby improving durability.

A tire 1 according to the sixth embodiment of the present invention is described below, with reference to FIG. 27 to FIG. 30.

For the tire 1 of the sixth embodiment, the one or more patterned regions K disposed on the decorative portion 14 include a first patterned region K. In the first patterned region K, multiple first protrusions Q protrude from the base surface 30 of the decorative portion 14 with a protrusion height of 0.1 mm or greater and 1.0 mm or less and are formed at a spacing of greater than 0.1 mm and 1.0 mm or less. In the first patterned region K, a gradually decreasing region is disposed in which first protrusions Q that are arranged adjacent to each other have heights that gradually decrease.

As illustrated in FIG. 27A, the tire side portion 1d of the tire 1 has a decorative portion 14 formed thereon. The decorative portion 14 of the present embodiment is arc-shaped when viewed from the axial direction of the tire 1. The decorative portion 14 may be a circumferentially continuous circular ring.

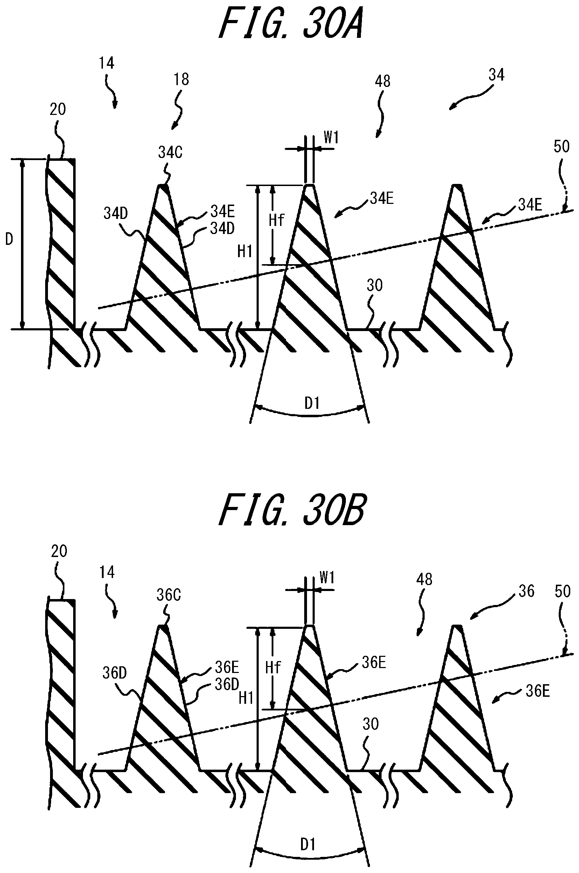

Furthermore, the base surface 30 is formed on the decorative portion 14 on the tire side portion 1d. The base surface 30 is smooth with constant dimensions and is recessed with respect to other regions 20 (refer to FIG. 30). The other regions 20 are regions other than the decorative portion 14 on the tire side portion 1d, and are regions in which no protrusions or the like that are described later are formed. In the present embodiment, the base surface 30 is recessed by 0.45 (mm) with respect to the other regions 20 of the tire side portion 1d (refer to FIG. 30). The base surface 30 of the present embodiment has the same surface roughness as the other regions 20.

Furthermore, on the decorative portion 14, a low brightness region 18 (K) that appears black and has a lower brightness compared to the other regions 20 is completely formed. The low brightness region 18 is an example of the patterned region K.

The low brightness region 18 is formed by disposing irregularities in portions in the tire-forming mold for forming the tire 1. These portions in the tire-forming mold correspond to the low brightness region 18. The low brightness region 18 is preferably arranged on the tire side portion 1d in terms of visibility when the tire 1 is installed on a vehicle.

### (Low Brightness Region 18)

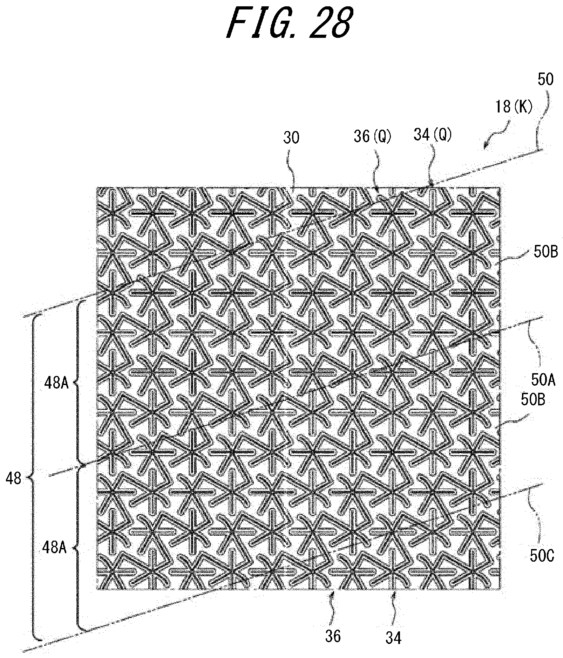

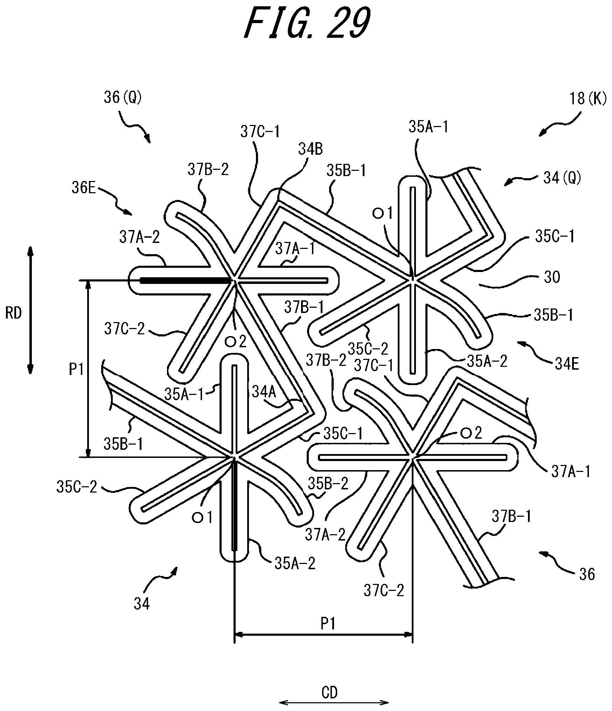

As illustrated in FIG. 28 and FIG. 29, the low brightness region 18 has multiple asterisk-shaped protrusions (asterisk protrusions) Q that protrude from the base surface 30. Specifically, the low brightness region 18 has multiple first asterisk protrusions 34 (Q) and multiple second asterisk protrusions 36 (Q). Then, the first asterisk protrusions 34 and the second asterisk protrusions 36 are alternately arranged in the tire circumferential direction and the tire radial direction. The first asterisk protrusions 34 and the second asterisk protrusions 36 are an example of protrusions Q.

### [First Asterisk Protrusions 34]

As illustrated in FIG. 29, the first asterisk protrusions 34 are formed of first extension portions 35A-1, 35A-2, second extension portions 35B-1, 35B-2, and third extension portions 35C-1, 35C-2 that extend in respectively different directions from a center 201 as a base point as viewed orthogonally to the base surface 30 (in a rotation axis direction of the tire 1). Hereafter, these six extension portions may also be referred to collectively as "extension portions 34E". Then, a line shape that is bent at the center O1 is formed by an extension portion 34E and another extension portion 34E (apart from those that extend from the center O1 in directions opposite from each other).

The first extension portion 35A-1 and the first extension portion 35A-2 extend from the center O1 in directions opposite from each other, and a continuous linear shape is formed by the first extension portion 35A-1 and the first extension portion 35A-2. The first extension portion 35A-1 extends from the center O1 to the outer side in the tire radial direction, and the first extension portion 35A-2 extends from the center O1 to the inner side in the tire radial direction. Then, the first extension portion 35A-1 and the first extension portion 35A-2 are of similar length. Hereafter, the first extension portion 35A-1 and the first extension portion 35A-2 may also be referred to collectively as "first extension portions 35A".

The second extension portion 35B-1 and the second extension portion 35B-2 extend from the center O1 in directions opposite from each other, and a continuous linear shape is formed by the second extension portion 35B-1 and the second extension portion 35B-2. The second extension portion 35B-1 and the second extension portion 35B-2 are inclined with respect to the tire circumferential direction so that an end on one side (left side in the drawing) in the tire circumferential direction is positioned on the outer side in the tire radial direction compared to an end on the other side (right side in the drawing).

The second extension portion 35B-1 extends from the center O1 to a side in the tire circumferential direction, and the second extension portion 35 B-2 extends from the center O1 to another side in the tire circumferential direction. Then the second extension portion 35B-1 is longer compared to the second extension portion 35B-2. Furthermore, the leading-edge portion of the second extension portion 35B-2 curves to the inner side in the tire radial direction. Hereafter, the second extension portion 35B-1 and the second extension portion 35B-2 may also be referred to collectively as "second extension portions 35B".

The third extension portion 35C-1 and the third extension portion 35C-2 extend from the center O1 in directions opposite from each other, and a continuous linear shape is formed by the third extension portion 35C-1 and the third extension portion 35C-2. The third extension portion 35C-1 and the third extension portion 35C-2 are inclined with respect to the tire circumferential direction so that an end on one side (left side in the drawing) in the tire circumferential direction is positioned on the inner side in the tire radial direction compared to an end on the other side (right side in the drawing).

The third extension portion 35C-1 extends from the center O1 to the other side in the tire circumferential direction, and the third extension portion 35C-2 extends from the center O1 to the side of the tire circumferential direction. Then, the third extension portion 35C-1 is shorter compared to the third extension portion 35C-2. Hereafter, the third extension portion 35C-1 and the third extension portion 35C-2 may also be referred to collectively as "third extension portions 35C".

The six extension portions 34E are angled at 60° respectively to adjacent extension portions 34E. The first asterisk protrusions 34, in other words, have a shape of the six extension portions 34E that extend radially from the center O1.

As illustrated in FIG. 30A, for the extension portions 34E of the first asterisk protrusions 34, a cross section in a direction orthogonal to the extension direction is isosceles triangle shaped with a flat top surface 34C. In other words, the first asterisk protrusions 34 have a top surface 34C and a pair of side surfaces 34D. In the present embodiment, the width of the top surface 34C (W1 in the drawing) is 0.02 [mm], and the apex angle of the first asterisk protrusions 34 is 26 [degrees] (D1 in the drawing). Additionally, the height (H1 in the drawing) of the first asterisk protrusions 34, which is measured from the base surface 30, is a predetermined value of 0.1 [mm] or greater and 1.0 [mm] or less. When a height of the protrusions (protrusion height) is less than 0.1 [mm], forming the protrusions becomes difficult, and it may not be possible to lower the brightness sufficiently to attenuate the incident light to an extent that the protrusions appear black (see below for details). Furthermore, by making the height of the protrusions 1.0 [mm] or less, the difference between the rigidity of a protrusion and the rigidity in the vicinity of the protrusion is reduced, so that local stress concentration is reduced.

The height of the protrusions and dimensions such as the spacing (pitch) between the protrusions, which are described later, in the present embodiment can be measured using, for example, a VR-3000 series one-shot 3D shape measuring machine by Keyence Corporation.

### [Second Asterisk Protrusions 36]

As illustrated in FIG. 29, the second asterisk protrusions 36 have the same shape as the first asterisk protrusions 34. Specifically, the second asterisk protrusions 36 have the shape of a first asterisk protrusion 34 that is rotated 90 [degrees] clockwise centered on the center O1, as viewed orthogonally to the base surface 30, after which the shape of the first asterisk protrusion 34 that is rotated 90 [degrees] centered on the center O1 is inverted top to bottom.

For the second asterisk protrusions 36, portions that correspond to the first extension portions 35A-1, 35A-2, the second extension portions 35B-1, 35B-2, the third extension portions 35C-1, 35C-2, and the center O1 of the first asterisk protrusions 34 are referred to as first extension portions 37A-1, 37A-2, second extension portions 37B-1, 37B-2, third extension portions 37C-1, 37C-2, and a center O2. Hereafter, the six aforementioned extension portions may also be referred to collectively as "extension portions 36E".

As illustrated in FIG. 30B, for the second asterisk protrusions 36, the portion that corresponds to the top surface 34C of the first asterisk protrusions 34 is referred to as a top surface 36C. Furthermore, for the second asterisk protrusions 36, portions that correspond to the side surfaces 34D of the first asterisk protrusions 34 are referred to as side surfaces 36D. The height H1 and apex angle D1 of the second asterisk protrusions 36 have the same prescription as the first asterisk protrusions 34.

### [Others]

As illustrated in FIG. 28 and FIG. 29, the first asterisk protrusions 34 and the second asterisk protrusions 36 are alternately arranged in the tire circumferential direction and the tire radial direction, filling the entirety of the low brightness region 18.

Then, the respective tips of the first extension portions 35A-1, 35A-2 of the first asterisk protrusions 34 are respectively inserted between the second extension portion 37B-1 and the third extension portion 37C-2, which are adjacent in the tire radial direction, and between the second extension portion 37B-2 and the third extension portion 37C-1, which are adjacent in the tire radial direction, of the second asterisk protrusions 36. Additionally, the respective tips of the first extension portions 37A-1, 37A-2 of the second asterisk protrusions 36 are inserted between the second extension portion 35B-1 and the third extension portion 35C-2, which are adjacent in the tire circumferential direction, and between the second extension portion 35B-2 and the third extension portion 35C-1, which are adjacent in the tire circumferential direction, of the first asterisk protrusions 34.

Furthermore. the tip of the third extension portion 35C-1 of the first asterisk protrusions 34 is connected to the tip of the second extension portion 37B-1 of the second asterisk protrusions 36 that are arranged on the outer side in the tire radial direction relative to the first asterisk protrusions 34. Accordingly, a connecting portion 34A is formed. Furthermore, the tip of the second extension portion 35B-1 of the first asterisk protrusions 34 is connected to the tip of the third extension portion 37C-1 of the second asterisk protrusions 36 that are arranged on a side in the tire circumferential direction relative to the first asterisk protrusions 34. Accordingly, a connecting portion 34B is formed.

In this configuration, the first asterisk protrusions 34 and the second asterisk protrusions 36 are connected in a staircase-shape from the inner side to the outer side in the tire radial direction via the connecting portions 34A, 34B.

Additionally, for the first asterisk protrusions 34 and the second asterisk protrusions 36 that are adjacent to each other in the tire radial direction and the tire circumferential direction, the spacing (hereafter, "spacing P1") between the center O1 and the center O2 is a predetermined value of 0.1 [mm] or greater and 1.0 [mm] or less. When the spacing P1 is less than 0.1 [mm], forming the protrusions becomes difficult. Furthermore, when the spacing P1 is greater than 1.0 [mm], it may not be possible to lower the brightness sufficiently to attenuate the incident light to an extent that the protrusions appear black compared to the other regions 20, which is a region other than the decorative portion 14 on the tire side portion 1d (see below for details).

As illustrated in FIG. 30, the height H1 of the first asterisk protrusions 34 and the height H1 of the second asterisk protrusions 36 are preferably smaller than the depth dimension D (the dimension from the surface of the other regions 20 of the tire side portion 1d to the base surface 30) of each decorative portion 14. In other words, the first asterisk protrusions 34 and the second asterisk protrusions 36 preferably do not protrude further than the surface of the other regions 20 of the tire side portion 1d.

### [Gradation Region 48]

On the decorative portion 14 of the present embodiment, the brightness of the low brightness region 18 is not uniformly lowered throughout (i.e., the brightness value is not a constant value). The gradation of brightness is applied to some portions of the low brightness region 18 to make the low brightness region 18 appear gradually lighter from black to increase the range for expressing the decorative portion. Hereafter, the gradated area in the low brightness region 18 is referred to as the gradation region 48. As illustrated in FIG. 27, on the decorative portion 14 in the present embodiment, four band-shaped gradation regions 48 that extend at an inclination relative to the tire circumferential direction are disposed thereon.

As illustrated in FIG. 27B, the low brightness region 18 in the present embodiment has a raised bottom protrusion 50 with a rib shape disposed on the base surface 30 to provide a gradation region 48. The raised protrusion 50 is an example of a raised bottom portion. The cross-sectional shape that is perpendicular to the longitudinal direction of the raised bottom protrusions 50 is highest at a central ridge 50A and gradually decreases in height from the ridge 50A to both sides in the width direction. In other words, the raised bottom protrusion 50 gradually increases in height from both widthwise edges (base) 50C to the ridge 50A. In this raised bottom protrusion 50, a portion on one side of the ridge 50A (half of the raised bottom protrusion 50 in the width direction) is an example of a gradual increase region. Slopes 50B, which are positioned on both sides of the ridge 50A, are formed into approximately arc-shaped surfaces that have centers of curvature on the outside of the tire and become convex toward the base surface 30. In other words, the slope angles of the slopes 50B relative to the base surface 30 gradually and progressively increases from the widthwise edges (base) 50C toward the ridge 50A.

For the cross-sectional view that is perpendicular to the longitudinal direction of the raised bottom protrusion 50 illustrated on the left side in FIG. 27B and for the enlarged plan view that illustrates the brightness of the gradation region 48 of the low brightness region 18 on the right side, the first asterisk protrusions 34 and the second asterisk protrusions 36 are omitted, and the plan view on the right side illustrates only changes in the brightness is represented in the plan view on the right side.

The height 3H3 of the raised bottom protrusion 50 is preferably smaller than the depth dimension D of the decorative portion 14 (refer to FIG. 30A) and preferably smaller than the height H1 of the first asterisk protrusions 34 and the height H1 of the second asterisk protrusions 36 (refer to FIG. 30). The height 3H3 of the raised bottom protrusion 50 in the present embodiment is constant in the longitudinal direction of the raised bottom protrusion 50. The width 3W of the raised bottom protrusions 50 is unspecified. As illustrated in FIG. 28, multiple first asterisk protrusions 34 and second asterisk protrusions 36 may be arranged in the width direction (direction in which the height changes) within a half region 48A which is 1/2 of the gradation region 48 (the width of 1/2 of the width 3W of the raised bottom protrusion 50) in a width direction. The half region 48A is an example of a gradually decreasing region.

Here, for the base surface 30 of the gradation region 48 of the present embodiment, the region in which a slope 50B from the ridge 50A to the widthwise edge (base) 50C is disposed, in other words, the half region 48A which is 1/2 of the gradation region 48, corresponds to the gradually decreasing region as an example according to the present invention. For the multiple first asterisk protrusions 34 and second asterisk protrusions 36, by disposing a slope 50B on the base surface 30, the height (apparent height) Hf that is measured from the surface of the raised bottom protrusion 50 (surface of the slope 50B) gradually decrease and follows the slope 50B from the ridge 50A to the widthwise edge (base) 50C.

Here, the low brightness region 18 that appears black and is described in the present embodiment is a region that has a brightness value L of less than 10 for example, as measured with a handy spectrophotometer from Nippon Denshoku Industries Co., Ltd., and although the low brightness region 18 may appear blacker than the other regions 20 that are regions other than the decorative portion 14, the brightness value L may not necessarily be less than 10.

On the other hand, although the other regions 20 (regions in which no first asterisk protrusions 34 and no second asterisk protrusions 36 are formed), other than the decorative portion 14, on the tire side portion 1d are regions that have a brightness value L of greater than 20 for example, as measured with a handy spectrophotometer from Nippon Denshoku Industries Co., Ltd., the brightness L may be 20 or less. In other words, the low brightness region 18, which appears black, is a region of relatively low brightness compared to a surrounding in the outer surface of the tire 1.

### (Action and Effect)

Next, the actions and effects of the decorative portion 14 and the patterned region K of the tire 1 according to the sixth embodiment are described.

In the other regions 20, in which no first asterisk protrusions 34 and no second asterisk protrusions 36 are formed, of the tire side portion 1d, the light that was reflected is reflected to the outer side by an outer surface that forms the other regions 20.

On the other hand, In the low brightness region 18 disposed on the decorative portion 14 of the tire side portion 1d, light that is incident on the first asterisk protrusions 34 and the second asterisk protrusions 36 that are formed in the low-brightness region 18 hits the side surfaces 34D as illustrated in FIG. 30A. Then, the light that was incident attenuates while repeatedly reflecting between the side surfaces 34D and the side surfaces 36D that face each other and is thus reflected to the outer side.

Therefore, the amount of light that is reflected to the outer side in the low brightness region 18 is less compared to the other regions 20 than the amount of light that is reflected to the outer side in the other regions 20 in which no first asterisk protrusions 34 and no second asterisk protrusions 36 are formed, and thus, the low brightness region 18 appears relatively black.

Additionally, as illustrated in FIG. 27 and FIG. 30, the low brightness region 18 has a gradation region 48 disposed therein. The gradation region 48 changes the height Hf measured from the surface of the raised bottom protrusions 50 of the multiple first asterisk protrusions 34 and second asterisk protrusions 36. In the gradation region 48, less light is reflected to the outer side in portions, in which first asterisk protrusions 34 and second asterisk protrusions 36 having a relatively high height Hf are formed, causing the portions to appear relatively dark, and relatively more light is reflected to the outer side in portions, in which first asterisk protrusions 34 and second asterisk protrusions 36 having a relatively low height Hf are formed, causing the portions to appear relatively bright.

In the gradation region 48, the height of the raised bottom protrusion 50 gradually changes, and thus the raised bottom protrusion 50 appears to gradually brighten from the lower part to the higher part of the raised bottom protrusion 50. That is, a smooth gradation in brightness is applied in the gradation region 48, and thus the range for expressing the decorative portion 14 can be increased (the number of modalities can be increased) compared to a case in which the brightness is constant. In the low brightness region 18, a vicinity of the ridge 50A of the raised bottom protrusion 50 becomes relatively bright and prominent.

As illustrated in FIG. 29, the respective extension portions 34E of the first asterisk protrusions 34 extend in different directions, and the respective extension portions 36E of the second asterisk protrusions 36 extend in different directions. Accordingly, differences in appearance of the low brightness region 18 can be reduced even when viewing the low brightness region 18 at different viewing angles.

Additionally, the first asterisk protrusions 34 and the second asterisk protrusions 36 are connected to each other in a staircase-shape via the connecting portion 34A and the connecting portion 34B. Accordingly, the first asterisk protrusions 34 and the second asterisk protrusions 36 can support each other via the connecting portions 34A, 34B, preventing the first asterisk protrusions 34 and the second asterisk protrusions 36 from collapsing, and thereby improving durability.

A tire 1 according to the seventh embodiment of the present invention is described below, with reference to FIG. 31 to FIG. 36.

For the tire 1 of the seventh embodiment, the one or more patterned regions K disposed on the decorative portion 14 include a first patterned region K. The first patterned region K has multiple first protrusions Q formed thereon and adjacent to each other. The first protrusions Q extend along the base surface 30, and the first protrusions Q are configured to include a base portion forming a base surface 30 side and a tip portion forming a protruding tip side. In the first patterned region K, an overlapping portion is formed within which at least some of the first protrusions Q that are adjacent to each other overlap each other as viewed from a direction of a length of the first protrusions Q. The first protrusions Q in the first patterned region K protrude from the base surface 30 with a protrusion height of 0.1 mm or greater and 1.0 mm or less and first protrusions adjacent to each other have a pitch of 0.1 mm or greater and 1.0 mm or less.

As illustrated in FIG. 31, the tire side portion 1d, as an example of the tire outer surface of tire 1, has a decorative portion 14 having a base surface 30 formed thereon. The decorative portion 14 is arc-shaped, as viewed from the axial direction of the tire 1, and, in the present embodiment, is arranged at two symmetrical positions across the tire center axis CE.

Additionally, the base surface 30 is formed on the decorative portion 14 on the tire side portion 1d. The base surface 30 is recessed with respect to other regions 418 that are regions other than the decorative portion 14 on the tire side portion 1d and are regions in which no protrusions or the like are formed. The base surface 30 forms a bottom surface of the decorative portion 14 and is a curved surface that forms a convexity on the outer side in the width direction of the tire 1 as viewed from the tire circumferential direction. In the present embodiment, the base surface 30 is recessed by 0.4 (mm) with respect to the other regions 418.

Furthermore, on the decorative portion 14, a patterned region 420(K) that becomes a low brightness region that appears black and has a lower brightness compared to the other regions 418 is formed. In other words, the patterned region 420 forms the decorative portion 14.

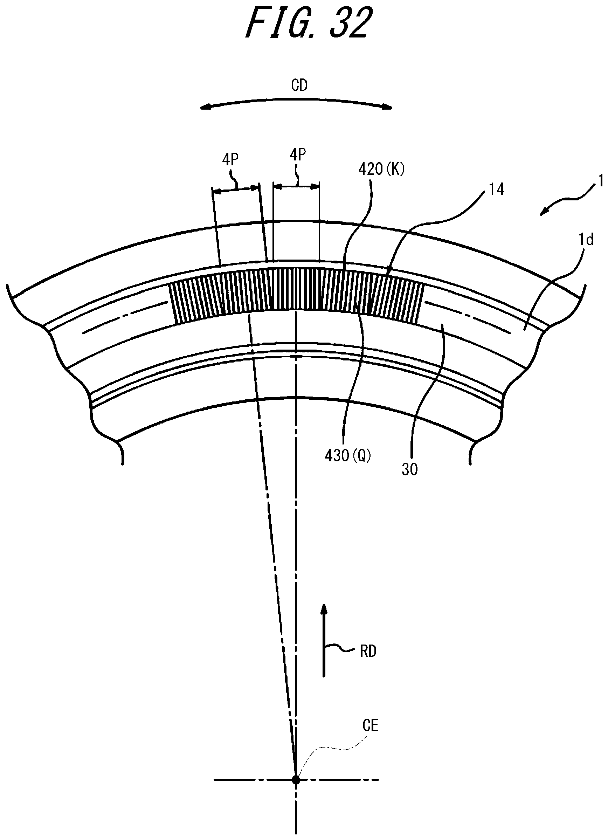

Then, as illustrated in FIG. 32, the patterned region 420 that is formed on the decorative portion 14 extends in the tire circumferential direction, and the other regions 418 are arranged respectively on both ends of the patterned region 420 in the tire circumferential direction.

The low brightness region is formed by disposing irregularities in portions in the tire-forming mold for forming the tire 1. These portions in the tire-forming mold correspond to the patterned region 420. Additionally, the patterned region 420 is arranged further to the outer side in the tire radial direction than the tire maximum width position (a part with maximum linear distance between the tire side portions). This is preferable in terms of improving the visibility of the patterned region 420 when the tire 1 is mounted on a vehicle.

### <Configuration of Main Parts>

The main parts of the present embodiment are described in accordance with FIG. 32 to FIG. 36.

### [Patterned Region]

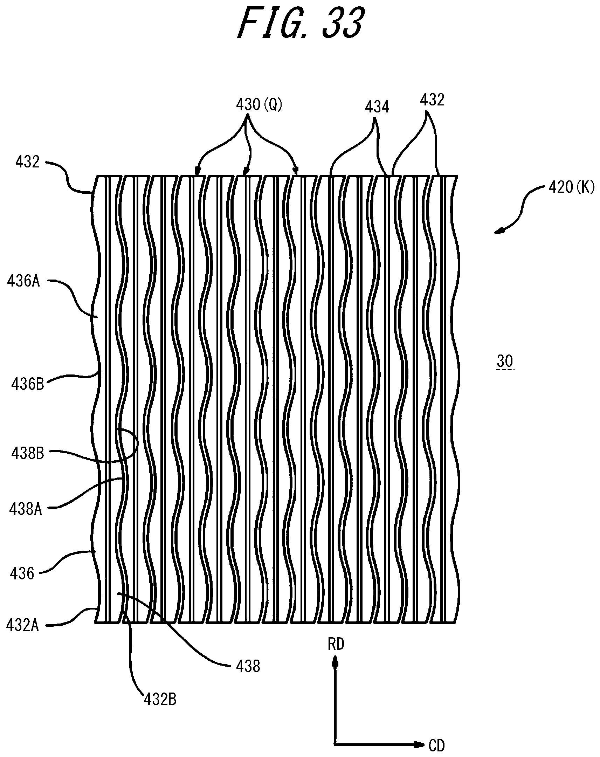

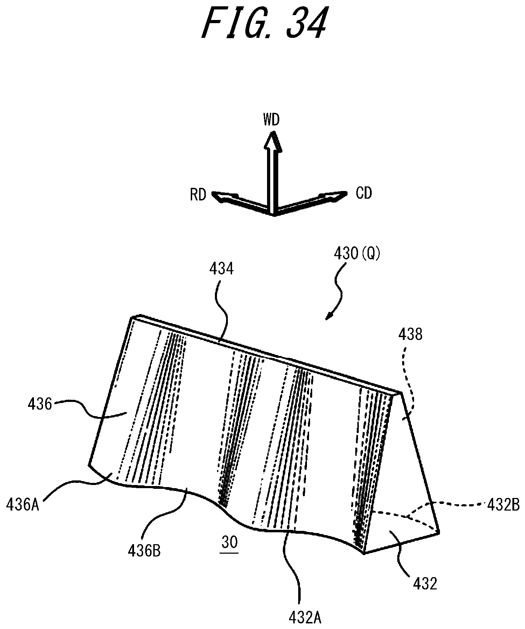

As illustrated in FIG. 33 and FIG. 34, the patterned region 420 (K) protrudes from the base surface 30 of the decorative portion 14 and includes a base portion 432 and protrusions 430 (Q). The base portion 432 extends along the base portion 30 and forms a base surface 30 side, and the protrusions 430 (Q) are configured to include tip portions 434 that protrude from the base surface 30 in a direction orthogonal to the base surface and form a tip side.

Additionally, as illustrated in FIG. 33, the patterned region 420 has multiple protrusions 430 formed thereon and adjacent to each other. The sides of the base portion 432 side of the protrusions 430 that are adjacent to each other overlap each other as viewed from the direction of the length of the protrusions 430.

As illustrated in FIG. 32, the patterned region 420 is divided into multiple regions 4P in the tire rotation direction CD on the decorative portion 14.

In each region 4P, multiple protrusions 430 that are adjacent to each other are formed parallel to each other within the range of the region 4P.

Accordingly, the patterned region 420 is divided into regions 4P. Each region 4P is radially arranged in the radial direction RD of the tire with respect to the central axis CE of the tire.

### (Protrusion)

As illustrated in FIG. 33 to FIG. 35, the protrusions 430 (Q) are configured to include a base portion 432, a tip portion 434, a first wall 436, and a second wall 438, as described later.

Additionally, the protrusions 430 have a shape that is wider at the base portion 432 side and narrower at the tip portion 434 side, as viewed in the direction of the length of the protrusion along the base surface 30.

Additionally, the first wall 436 and the second wall 438 connect the base portion 432 and the tip portion 434.

As illustrated in FIG. 33, these protrusions 430 are arranged along the base surface 30, and in the present embodiment, are adjacent to each other and are in parallel in the radial direction RD of the tire.

### (Base Portion)

The base portion 432, as illustrated in FIG. 34, forms a base surface 30 side of the protrusion 430 and, as viewed from the direction of the length of the protrusions 430, is formed to be wider than the tip portions 434, which are described later.

Additionally, the side of the base portion 432 is formed in a wavy shape as viewed from a direction orthogonal to the base surface 30, i.e., as viewed from the width direction WD of the tire.

### (Tip Portion)

The tip portions, as illustrated in FIG. 33 and FIG. 34, form a tip side in which the protrusions 430 protrude from the base surface 30, are formed in a straight line in the radial direction RD of the tire, and connect the base portion 432, the first wall 436 and second wall 438, which are described later.

### (First Wall)

The first wall 436 is formed in a plane shape extending toward the tip portions 434 and one end 432A of the base portion 432.

Additionally, the first wall 436 is formed in a wavy shape as viewed from a direction orthogonal to the base surface 30, i.e., from the tire width direction WD.

This wavy-shaped first wall 436 is based on the tip portions 434 and is configured to include peak portions 436A that project out toward the base portion 432 and valley portions 436B that are recessed from the peak portions 436A toward the base 432.

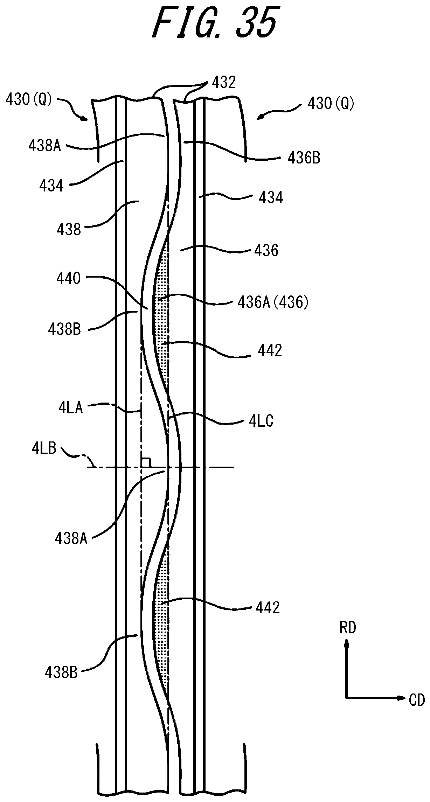

Specifically, as illustrated in FIG. 35, the peak portions 436A and valley portions 436B are periodical and continuous in the direction of the length of the protrusions 430 and have an amplitude in the direction of a line 4LB. Here, the line 4LB is a line that is orthogonal to a line 4LA which connects adjacent valley portions 436B in the first wall 436.

### (Second Wall)

The second wall 438 is formed in a plane shape extending toward the tip portions 434 and another end 432B of the base portion 432.

Additionally, the second wall 438 is formed in a wavy shape as viewed from a direction orthogonal to the base surface 30, i.e., from the tire width direction WD.

This wavy-shaped second wall 438 is based on the tip portions 434 and is configured to include peak portions 438A that project out toward the base portion 432 and valley portions 438B that are recessed from the peak portions 438A toward the base 432.

Specifically, as illustrated in FIG. 35, the peak portions 438A and valley portions 438B are periodical and continuous in the direction of the length of the protrusions 430 and have an amplitude in the direction of the line 4LB that is orthogonal to the line 4LA which connects adjacent valley portions 438B in the first wall 438.

### [Relationship Between Adjacent Protrusions]

Protrusions 430 that have the configuration described above are formed adjacent to each other in the patterned region 420, and the arrangement relationship of adjacent protrusions are described below.

As illustrated in FIG. 35, one protrusion 430 (for example, the protrusion 430 on the left side of the drawing) and another protrusion 430 (for example, the protrusion 430 on the right side of the drawing) are arranged to be adjacent and parallel to each other.

In the present embodiment, the one protrusion 430 and the other protrusion 430 are arranged to be separated by a groove 440.

These two adjacent protrusions 430 are arranged so that the peak portions 438A of the second wall 438 of the one protrusion 430 and the valley portions 436B of the first wall 436 of the other protrusion 430 face each other.

Similarly, the valley portions 438B of the second wall portion 438 of the one protrusion 430 and the peak portions 436A of the first wall portion 436 of the other protrusion 430 are arranged to face each other.

Specifically, the second wall 438 of the one protrusion 430 and the first wall 436 of the other protrusion 430 face each other in the same phase, for example, in the same period, across the groove 440 in the direction of the length of the protrusions 430, that is, in the radial direction RD of the tire.

These peak portions 438A of the second wall 438 of the one protrusion 430 and these peak portions 436A of the first wall 436 of the other protrusion 430 that are periodic and face each other are arranged to overlap each other as viewed from the direction of the length of the protrusion 430, that is, from the radial direction RD of the tire.

Specifically, as illustrated in FIG. 35, the peak portions 436A of the other protrusion 430 cross over the line 4LC that connects the periodically arranged peak portions 438A of the one protrusion 430 and enter the side of the valley portions 438B of the one protrusion 430 to form overlapping portions 442.

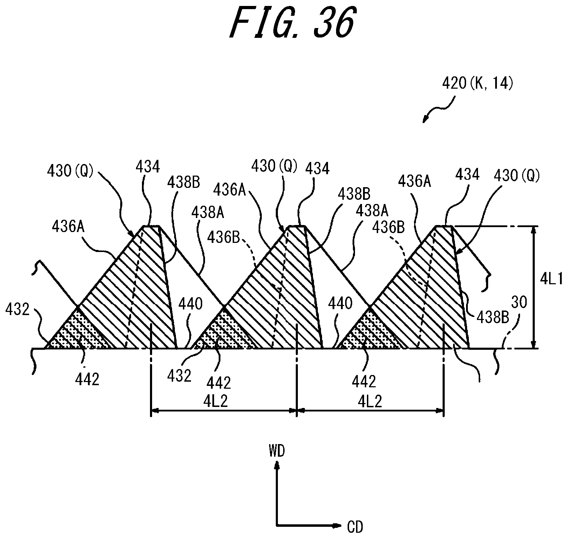

As viewed from the direction of the length of the protrusions 430, as illustrated in FIG. 36, the peak portions 438A of the one protrusion 430 and the peak portions 436A of the other protrusion 430 overlap each other to form overlapping portions 442 with a constant width and a constant height from the base portion 432 of the adjacent protrusions 430.

Specifically, the height of the overlap portions 442 in adjacent protrusions 430 is about one-half to one-third of the protrusion height 4L1 of the protrusions 430. This height depends on the protrusion height 4L1 of the protrusions 430 and the pitch 4L2 of the protrusions 430 that are adjacent to each other.

In other words, the constant width and the constant height of this overlapping portion 442 may be set as a predetermined width and a predetermined height, and the protrusion height 4L1 of the protrusions 430 and the pitch 4L2 of the protrusions 430 that are adjacent to each other may be determined so that the width and height are secured.

The relationship between the protrusions 430 having this configuration and the protrusions 430 that are adjacent to each other is repeated multiple times within the region 4P in the tire rotation direction CD, and thereby forms one patterned region 420.

Then, multiple patterned regions 420 are formed on the decorative portion 14 to be continuous in the tire rotation direction.

In the present embodiment, the protrusions 430 in the patterned region 420 protrude with a protrusion height 4L1 of 0.1 mm or greater and 1.0 mm or less from the base surface 30, and the protrusions 430 that are adjacent to each other have a pitch 4L2 of 0.1 mm or greater and 1.0 mm or less.

Additionally, preferably, the protrusion height 4L1 of the protrusions 430 is 0.2 or greater and 0.8 or less, and the pitch 4L2 of the protrusions 430 that are adjacent to each other is 0.2 mm or greater and 0.8 mm or less.

A protrusion height 4L1 of the protrusions 430 being less than 0.1 mm makes production difficult, and a protrusion height 4L1 of the protrusions 430if exceeding 1.0 mm increases the possibility of the protrusions 430 collapsing or breaking, which is undesirable.

Additionally, the pitch 4L2 of protrusions 430 that are adjacent to each other being less than 0.1 mm makes production difficult, and a pitch 4L2 of protrusions 430 that are adjacent to each other exceeding 1.0 mm makes the slope of the first wall 436 and second wall 438 more gentle, reflects light, and it becomes impossible to maintain a low brightness, which is undesirable.

The height of the protrusions and dimensions such as the pitch of adjacent protrusions in the present embodiment can be measured using, for example, a VR-3000 series one-shot 3D shape measuring machine by Keyence Corporation.

### <Action and Effect of Main Parts>

Next, the actions and effects of the decorative portion 14 and the patterned region K of the tire 1 according to the seventh embodiment are described.

First, as a comparative example, for a patterned region in the decorative portion, in which protrusions are formed in a straight line and there is no overlap between adjacent protrusions, light that is incident on the decorative portion passes uniformly in the direction of the length of the protrusions. Therefore, the difference between the brightness of the decorative portion and the brightness of the other regions, in which no protrusions are formed, is small, and for the tire, the range of expression of the decorative portion that has patterned regions, in which protrusions are formed, cannot be increased.

In contrast, for the decorative portion 14 in the present embodiment, some of the light that is incident on the patterned region 420 is blocked by the overlapping portion 442 illustrated in FIG. 35 and FIG. 36, and cannot pass in the direction of the length of the protrusion 430, that is, in the radial direction RD of the tire.

In other words, the brightness of the decorative portion 14 becomes lower than the brightness of the other regions 418 in which protrusions 430 are not formed.

Accordingly, for the tire 1, the range of expression of the decorative portion 14 having a patterned region 420, on which protrusions 430 are formed, can be increased.

Additionally, as illustrated in FIG. 36, light that is incident on the decorative portion 14 in the direction of the length of the protrusions 430 impacts the peak portions 436A of the first wall 436 and the peak portions 438A of the second wall 438 of the protrusions 430,and some of that light is not passed.

Additionally, other parts of the impacting light are reflected and attenuated between the peak portions 436A of the first wall 436 and the peak portions 438A of the second wall 438, thereby functioning to further reduce the brightness of the decorative portion 14 in addition to the light blocking function of the overlapping section 442.

### INDUSTRIAL APPLICABILITY

The tire according to the present invention can be preferably used for any type of pneumatic tire, for example, a passenger vehicle pneumatic tire, a truck/bus pneumatic tire, etc.

### REFERENCE SIGNS LIST

1: tire
1M: tire body, 1a: tread portion, 1b: sidewall portion, 1c: bead portion, 1d: tire side portion, 1ds: tire outer surface of tire side portion,
2ab: base surface,
3: reinforcement member, 3a: reinforcement ply, 3u: tire radial direction outer end of the reinforcement member,
4a: bead core, 4b: bead filler, 4b1, 4b2: bead filler portion, 4bu: tire radial direction outer end of bead filler,
5: carcass, 5a: carcass ply, 5M: ply main body, 5T: ply foldback portion, 5e: tire radial direction outer end of ply foldback portion of carcass, 6: belt, 6a: belt layer,
7: tread rubber, 8: side rubber,
9: inner liner,
10: communication device,
10e: RF Tag,
10b: antenna section, 10b1, 10b2: antenna,
10f: cover, 10f1, 10f2: cover member,
10c: IC chip,
10u: tire radial direction outer end of communication device,
10m: tire radial center of communication device,
14: decorative portion
30: base surface,
Q: protrusion (first protrusion, second protrusion, and third protrusion),
K: patterned region (first patterned region, second patterned region, third patterned region),
CL: tire equatorial plane,
WD: tire width direction, RD: tire radial direction, CD: tire circumferential direction,
LD: longitudinal direction of communication device, SD: lateral direction of communication device, TD: thickness direction of communication device

## Claims

1. A tire (1) comprising:
a communication device (10) embedded within a tire side portion (1d);
a decorative portion (14) formed on a tire outer surface of the tire side portion (1ds) and having a base surface (30); and
one or more patterned regions (K) disposed in the decorative portion (14),
wherein in each patterned region (K), protrusions (Q) that protrude with a protrusion height of 0.1 mm or greater and 1.0 mm or less from the base surface (30) of the decorative portion (14) are formed in plural with a spacing of 0.1 mm or greater and 3.0 mm or less,
the entirety of the communication device (10) is positioned within the decorative portion (14) in a plane projected in a tire width direction (WD) of the tire side portion (1d), and
wherein a tire radial direction outer end (10u) of the communication device (10) is positioned further to a tire radial direction inner side than a tire radial direction outer end (5e) of a ply foldback portion (5T) of a carcass (5).

2. The tire (1) according to claim **1,** wherein the one or more patterned regions (K) include a first patterned region (K), and
in the first patterned region (K), first protrusions (Q) that protrude with a protrusion height of 0.1 mm or greater and 1.0 mm or less from the base surface (30) of the decorative portion (14) are formed in plural with a spacing of greater than 1.0 mm and 3.0 mm or less.

3. The tire (1) according to claim 1, comprising a plurality of the patterned regions (K) in the decorative portion (14), wherein
the plurality of patterned regions (K) includes a first patterned region (K) and a second patterned region (K),
in the first patterned region (K), first protrusions (Q) that protrude with a protrusion height of a predetermined value of 0.1 mm or greater and 1.0 mm or less from the base surface (30) of the decorative portion (14) are formed in plural with a spacing of a predetermined value of 0.1 mm or greater and 1.0 mm or less,
in the second patterned region (K), second protrusions (Q) that protrude with a protrusion height of a predetermined value of 0.1 mm or greater and 1.0 mm or less from the base surface (30) of the decorative portion (14) are formed in plural with a spacing of a predetermined value of 0.1 mm or greater and 1.0 mm or less,
the spacing between the first protrusions (Q) and the spacing between the second protrusions (Q) are similar, and the protrusion height of the first protrusions (Q) and the protrusion height of the second protrusions (Q) are different.

4. The tire (1) according to claim 1, wherein the one or more patterned regions (K) include a first patterned region (K), and
in the first patterned region (K), first protrusions (Q) that protrude with a protrusion height 0.1 mm or greater and 1.0 mm or less from the base surface (30) of the decorative portion (14) are formed in plural with a spacing of greater than 0.1 mm and 1.0 mm or less, and
in at least the first patterned region (K), a plurality of the first protrusions (Q) is inclined in a direction with respect to a normal line that is perpendicular to the base surface (30).

5. The tire (1) according to claim 1, wherein the one or more patterned regions (K) include a first patterned region (K), and
in the first patterned region (K), first protrusions (Q) that protrude with a protrusion height 0.1 mm or greater and 1.0 mm or less from the base surface (30) of the decorative portion (14) are formed in plural with a spacing of greater than 0.1 mm and 1.0 mm or less, and
in the first patterned region (K), a gradual decrease region is disposed within which the protrusion height of a plurality of the first protrusions (Q) that are arranged adjacent to each other gradually decrease.

6. The tire (1) according to claim 1, wherein the one or more patterned regions (K) include a first patterned region (K), and
in the first patterned region (K), first protrusions (Q) are formed in plural in a state of being adjacent to each other,
each of the first protrusions (Q) extends along the base surface (30),
each of the first protrusions (Q) is configured to include a base portion (432) that forms a side of the base surface (30) and a tip portion (434) that forms a side of the protruding tip,
the first patterned region (K) has a portion formed therein within which at least some of the first protrusions (Q) that are adjacent to each other overlap each other as viewed from a direction of a length of the first protrusions (Q),
the first protrusions (Q) in the first patterned region (K) protrude with a protrusion height of 0.1 mm or greater and 1.0 mm or less from the base surface (30), and the first protrusions (Q) adjacent to each other have a pitch of 0.1 mm or greater and 1.0 mm or less.

7. The tire (1) according to any one of claims 2 to 5, wherein each first protrusion (Q) is an asterisk protrusion (Q).

8. The tire (1) according to any one of claims 1 to 7, wherein the communication device (10) has an RF tag (10e).

## Patentansprüche

1. Reifen (1), umfassend:
eine Kommunikationsvorrichtung (10), die innerhalb eines Reifenseitenabschnitts (1d) eingebettet ist;
einen dekorativen Abschnitt (14), der auf einer Reifenaußenfläche des Reifenseitenabschnitts (1ds) ausgebildet ist und eine Basisfläche (30) aufweist; und
einen oder mehrere gemusterte Bereiche (K), die im dekorativen Abschnitt (14) angeordnet sind,
wobei in jedem gemusterten Bereich (K) Vorsprünge (Q), die mit einer Vorsprungshöhe von 0,1 mm oder mehr und 1,0 mm oder weniger von der Basisoberfläche (30) des dekorativen Abschnitts (14) vorstehen, in mehreren mit einem Abstand von 0,1 mm oder mehr und 3,0 mm oder weniger ausgebildet sind,
die Gesamtheit der Kommunikationsvorrichtung (10) innerhalb des dekorativen Abschnitts (14) in einer Ebene positioniert ist, die in einer Reifenbreitenrichtung (WD) des Reifenseitenabschnitts (1d) projiziert wird, und
wobei ein in Reifenradialrichtung äußeres Ende (10u) der Kommunikationsvorrichtung (10) weiter zu einer in Reifenradialrichtung inneren Seite positioniert ist als ein in Reifenradialrichtung äußeres Ende (5e) eines Lagenumschlagabschnitts (5T) einer Karkasse (5).

2. Reifen (1) nach Anspruch 1, wobei der eine oder die mehreren gemusterten Bereiche (K) einen ersten gemusterten Bereich (K) einschließen, und
im ersten gemusterten Bereich (K) erste Vorsprünge (Q), die mit einer Vorsprungshöhe von 0,1 mm oder mehr und 1,0 mm oder weniger von der Basisoberfläche (30) des dekorativen Abschnitts (14) hervorstehen, in mehreren mit einem Abstand von mehr als 1,0 mm und 3,0 mm oder weniger ausgebildet sind.

3. Reifen (1) nach Anspruch 1, der eine Vielzahl der gemusterten Bereiche (K) im dekorativen Abschnitt (14) umfasst, wobei
die Vielzahl von gemusterten Bereichen (K) einen ersten gemusterten Bereich (K) und einen zweiten gemusterten Bereich (K) einschließt,
im ersten gemusterten Bereich (K) erste Vorsprünge (Q), die mit einer Vorsprungshöhe eines vorbestimmten Werts von 0,1 mm oder mehr und 1,0 mm oder weniger von der Basisfläche (30) des dekorativen Abschnitts (14) vorstehen, in mehreren mit einem Abstand eines vorbestimmten Werts von 0,1 mm oder mehr und 1,0 mm oder weniger ausgebildet sind,
im zweiten gemusterten Bereich (K) zweite Vorsprünge (Q), die mit einer Vorsprungshöhe eines vorbestimmten Werts von 0,1 mm oder mehr und 1,0 mm oder weniger von der Basisfläche (30) des dekorativen Abschnitts (14) vorstehen, in mehreren mit einem Abstand eines vorbestimmten Werts von 0,1 mm oder mehr und 1,0 mm oder weniger ausgebildet sind,
der Abstand zwischen den ersten Vorsprüngen (Q) und der Abstand zwischen den zweiten Vorsprüngen (Q) ähnlich sind und die Vorsprungshöhe der ersten Vorsprünge (Q) und die Vorsprungshöhe der zweiten Vorsprünge (Q) unterschiedlich sind.

4. Reifen (1) nach Anspruch 1, wobei der eine oder die mehreren gemusterten Bereiche (K) einen ersten gemusterten Bereich (K) einschließen, und
im ersten gemusterten Bereich (K) erste Vorsprünge (Q), die mit einer Vorsprungshöhe von 0,1 mm oder mehr und 1,0 mm oder weniger von der Basisoberfläche (30) des dekorativen Abschnitts (14) hervorstehen, in mehreren mit einem Abstand von mehr als 0,1 mm und 1,0 mm oder weniger ausgebildet sind, und
in zumindest dem ersten gemusterten Bereich (K) eine Vielzahl der ersten Vorsprünge (Q) in einer Richtung bezüglich einer Normallinie geneigt ist, die senkrecht zur Basisoberfläche (30) steht.

5. Reifen (1) nach Anspruch 1, wobei der eine oder die mehreren gemusterten Bereiche (K) einen ersten gemusterten Bereich (K) einschließen, und
im ersten gemusterten Bereich (K) erste Vorsprünge (Q), die mit einer Vorsprungshöhe von 0,1 mm oder mehr und 1,0 mm oder weniger von der Basisoberfläche (30) des dekorativen Abschnitts (14) hervorstehen, in mehreren mit einem Abstand von mehr als 0,1 mm und 1,0 mm oder weniger ausgebildet sind, und
im ersten gemusterten Bereich (K) ein Bereich mit allmählicher Abnahme angeordnet ist, innerhalb dessen die Vorsprungshöhe einer Vielzahl der ersten Vorsprünge (Q), die nebeneinander angeordnet sind, allmählich abnimmt.

6. Reifen (1) nach Anspruch 1, wobei der eine oder die mehreren gemusterten Bereiche (K) einen ersten gemusterten Bereich (K) einschließen, und
im ersten gemusterten Bereich (K) erste Vorsprünge (Q) in mehreren in einem Zustand ausgebildet sind, in dem sie zueinander benachbart sind,
jeder der ersten Vorsprünge (Q) sich entlang der Basisfläche (30) erstreckt,
jeder der ersten Vorsprünge (Q) so konfiguriert ist, dass er einen Basisabschnitt (432), der eine Seite der Basisfläche (30) bildet, und einen Spitzenabschnitt (434), der eine Seite der hervorstehenden Spitze bildet, einschließt,
der erste gemusterte Bereich (K) einen darin ausgebildeten Abschnitt aufweist, innerhalb dessen sich zumindest einige der ersten Vorsprünge (Q), die zueinander benachbart sind, aus einer Richtung einer Länge der ersten Vorsprünge (Q) betrachtet, überlappen,
die ersten Vorsprünge (Q) im ersten gemusterten Bereich (K) mit einer Vorsprungshöhe von 0,1 mm oder mehr und 1,0 mm oder weniger von der Basisfläche (30) vorstehen und die ersten zueinander benachbarten Vorsprünge (Q) einen Zwischenraum von 0,1 mm oder mehr und 1,0 mm oder weniger aufweisen.

7. Reifen (1) nach einem der Ansprüche 2 bis 5, wobei jeder erste Vorsprung (Q) ein sternförmiger Vorsprung (Q) ist.

8. Reifen (1) nach einem der Ansprüche 1 bis 7, wobei die Kommunikationsvorrichtung (10) einen RF-Tag (10e) aufweist.

## Revendications

1. Pneu (1) comprenant :
un dispositif de communication (10) intégré dans une partie latérale de pneu (1d) ;
une partie décorative (14) formée sur une surface extérieure de pneu de la partie latérale de pneu (1ds) et présentant une surface de base (30) ; et
une ou plusieurs régions à motifs (K) disposées dans la partie décorative (14),
dans lequel dans chaque région à motifs (K), des saillies (Q) qui font saillie avec une hauteur de saillie de 0,1 mm ou plus et de 1,0 mm ou moins à partir de la surface de base (30) de la partie décorative (14) sont formées en plusieurs exemplaires avec un espacement de 0,1 mm ou plus et de 3,0 mm ou moins,
l'intégralité du dispositif de communication (10) est positionnée à l'intérieur de la partie décorative (14) dans un plan projeté dans une direction de largeur (WD) de pneu de la partie latérale de pneu (1d), et
dans lequel une extrémité extérieure de direction radiale de pneu (10u) du dispositif de communication (10) est positionnée plus loin vers un côté intérieur de direction radiale de pneu qu'une extrémité extérieure de direction radiale de pneu (5e) d'une partie de repli de pli (5T) d'une carcasse (5).

2. Pneu (1) selon la revendication 1, dans lequel les une ou plusieurs régions à motifs (K) incluent une première région à motifs (K), et
dans la première région à motifs (K), des premières saillies (Q) qui font saillie avec une hauteur de saillie de 0,1 mm ou plus et de 1,0 mm ou moins à partir de la surface de base (30) de la partie décorative (14) sont formées en plusieurs exemplaires avec un espacement de plus de 1,0 mm et de 3,0 mm ou moins.

3. Pneu (1) selon la revendication 1, comprenant une pluralité des régions à motifs (K) dans la partie décorative (14), dans lequel
la pluralité de régions à motifs (K) inclut une première région à motifs (K) et une seconde région à motifs (K),
dans la première région à motifs (K), des premières saillies (Q) qui font saillie avec une hauteur de saillie d'une valeur prédéterminée de 0,1 mm ou plus et de 1,0 mm ou moins à partir de la surface de base (30) de la partie décorative (14) sont formées en plusieurs exemplaires avec un espacement d'une valeur prédéterminée de 0,1 mm ou plus et de 1,0 mm ou moins,
dans la seconde région à motifs (K), des secondes saillies (Q) qui font saillie avec une hauteur de saillie d'une valeur prédéterminée de 0,1 mm ou plus et de 1,0 mm ou moins à partir de la surface de base (30) de la partie décorative (14) sont formées en plusieurs exemplaires avec un espacement d'une valeur prédéterminée de 0,1 mm ou plus et de 1,0 mm ou moins,
l'espacement entre les premières saillies (Q) et l'espacement entre les secondes saillies (Q) sont similaires, et la hauteur de saillie des premières saillies (Q) et la hauteur de saillie des secondes saillies (Q) sont différentes.

4. Pneu (1) selon la revendication 1, dans lequel les une ou plusieurs régions à motifs (K) incluent une première région à motifs (K), et
dans la première région à motifs (K), des premières saillies (Q) qui font saillie avec une hauteur de saillie de 0,1 mm ou plus et de 1,0 mm ou moins à partir de la surface de base (30) de la partie décorative (14) sont formées en plusieurs exemplaires avec un espacement de plus de 0,1 mm et de 1,0 mm ou moins, et
dans au moins la première région à motifs (K), une pluralité des premières saillies (Q) sont inclinées dans une direction par rapport à une ligne normale qui est perpendiculaire à la surface de base (30).

5. Pneu (1) selon la revendication 1, dans lequel les une ou plusieurs régions à motifs (K) incluent une première région à motifs (K), et
dans la première région à motifs (K), des premières saillies (Q) qui font saillie avec une hauteur de saillie de 0,1 mm ou plus et de 1,0 mm ou moins à partir de la surface de base (30) de la partie décorative (14) sont formées en plusieurs exemplaires avec un espacement de plus de 0,1 mm et de 1,0 mm ou moins, et
dans la première région à motifs (K) est disposée une région de diminution progressive, à l'intérieur de laquelle la hauteur de saillie d'une pluralité des premières saillies (Q) qui sont agencées adjacentes les unes aux autres diminue progressivement.

6. Pneu (1) selon la revendication 1, dans lequel les une ou plusieurs régions à motifs (K) incluent une première région à motifs (K), et
dans la première région à motifs (K), des premières saillies (Q) sont formées en plusieurs exemplaires dans un état où elles sont adjacentes les unes aux autres,
chacune des premières saillies (Q) s'étend le long de la surface de base (30),
chacune des premières saillies (Q) est configurée pour inclure une partie de base (432) qui forme un côté de la surface de base (30) et une partie pointe (434) qui forme un côté de la pointe en saillie,
la première région à motifs (K) présente une partie formée dans celle-ci à l'intérieur de laquelle au moins certaines des premières saillies (Q) qui sont adjacentes les unes aux autres se chevauchent les unes les autres vues depuis une direction d'une longueur des premières saillies (Q),
les premières saillies (Q) dans la première région à motifs (K) font saillie avec une hauteur de saillie de 0,1 mm ou plus et de 1,0 mm ou moins à partir de la surface de base (30), et les premières saillies (Q) adjacentes les unes aux autres présentent un pas de 0,1 mm ou plus et de 1,0 mm ou moins.

7. Pneu (1) selon l'une quelconque des revendications 2 à 5, dans lequel chaque première saillie (Q) est une saillie en forme d'astérisque (Q).

8. Pneu (1) selon l'une quelconque des revendications 1 à 7, dans lequel le dispositif de communication (10) présente une étiquette RF (10e).
